(19) Europäisches Patentamt

European Patent Office

Office européen des brevets

(11) Numéro de publication: **0 248 729 B1**

(12) **FASCICULE DE BREVET EUROPEEN**

(45) Date de publication de fascicule du brevet: **20.05.92**   (51) Int. Cl.⁵: $G06F$ **15/332**, $H04N$ **7/133**

(21) Numéro de dépôt: **87401233.9**

(22) Date de dépôt: **02.06.87**

(54) **Dispositifs de calcul de transformées cosinus monodimensionnelles, et dispositif de codage et dispositif de décodage d'images comportant de tels dispositifs de calcul.**

(30) Priorité: **06.06.86 FR 8608219**

(43) Date de publication de la demande:
**09.12.87 Bulletin 87/50**

(45) Mention de la délivrance du brevet:
**20.05.92 Bulletin 92/21**

(84) Etats contractants désignés:
**DE ES GB IT NL SE**

(56) Documents cités:
**US-A- 3 746 848**

**IEEE TRANSACTIONS ON COMMUNICA-TIONS, vol. COM-25, no. 9, septembre 1977, pages 1004-1009, New York, US; W.H. CHEN et al.: "A fast computational algorithm for the discrete cosine transform"**

**IEEE TRANSACTIONS ON COMPUTERS, vol. C-31, no. 9, septembre 1982, pages 899-906, IEEE, New York, US; F.A. KAMANGAR et al.: "Fast algorithms for the 2-D discrete cosine transform"**

(73) Titulaire: **THOMSON-CSF**
**51, Esplanade du Général de Gaulle**
**F-92800 Puteaux(FR)**

(72) Inventeur: **Aubie, Jean-Yves**
**SCPI-19, Avenue de Messine**
**F-75008 Paris(FR)**
Inventeur: **Le Pannerer, Yves-Marie**
**SCPI-19, Avenue de Messine**
**F-75008 Paris(FR)**
Inventeur: **Ferre, Alain**
**SCPI-19, Avenue de Messine**
**F-75008 Paris(FR)**
Inventeur: **Villalon, Yannick**
**SCPI-19, Avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

IEEE TRANSACTIONS ON ACOUSTICS, SPEECH, AND SIGNAL PROCESSING, vol. ASSP-32, no. 6, décembre 1984, pages 1243-1245, IEEE, New York, US; BYEONG GI LEE: "A new algorithm to compute the discrete cosine transform"

MICROPROCESSORS AND MICROSYSTEMS, vol. 8, no. 3, avril 1984, pages 126-135, Butterworth & Co. Ltd, Whitstable, Kent, GB; F. MORENO DEL COLLADO et al.: "Fast haar transform algorithm: a 6809-based realtime evaluation"

PROCEEDINGS OF THE 5TH INTERNATIONAL CONFERENCE ON PATTERN RECOGNITION, vol. 1, 1-4 décembre 1980, pages 183-191, IEEE, New York, US; E.G. SMITH: "Computer-aided design of a pla-implemented fast walsh-hadamard transform device"

## Description

L'invention concerne les dispositifs de calcul de transformées cosinus, qui sont utilisés notamment pour réaliser le codage d'images afin de réduire la quantité des informations représentant ces images. Cette réduction d'informations permet de transmettre ou de stocker des images par des moyens ayant un débit d'informations limité.

Il est connu par exemple de l'article suivant publié dans la revue IEEE Transactions on Communications, Vol com 25 n°9 septembre 1977 pages 1004-1009, New-York, US; WACHEN et al ayant pour titre "A fast computational algorithm for the discrete cosines transform" ou encore dans l'article IEEE Transactions on Computers Vol. C-31 septembre 1982 pages 899-906, IEEE, New-York US FA KAMANGAR et al ayant pour titre "Fast algorithms for the 2D discrete cosine transform"; de coder des valeurs représentatives de la luminance et de la couleur des points d'une image par une transformation dite transformation cosinus bi-dimensionnelle. Ce codage fait correspondre une matrice de N x N valeurs, dites transformées cosinus directes, à une matrice de N x N valeurs représentatives d'un bloc de N x N points de l'image à coder. Cette image est découpée généralement en portions carrées constituées chacune d'un bloc de N x N points. Une pondération des valeurs transformées permet de réduire la quantité des informations représentatives d'une image. Le décodage consiste à appliquer une pondération inverse puis une transformation cosinus inverse qui fait correspondre une matrice de N x N valeurs transformées inverses à une matrice de N x N transformées directes. Comme le codage, le décodage est réalisé par blocs de N x N points d'images.

Si les valeurs représentatives des points d'un bloc sont f(i,j) pour i = 0 à N - 1 et j = 0 à N - 1, les valeurs des transformées cosinus directes bi-dimensionnelles sont données par les formules suivantes :

pour u = 0 à N - 1
et v = 0 à N - 1,

$$F(u,v) = 4 \frac{c(u).c(v)}{N^2} . \sum_{i=0}^{N-1} . \sum_{j=0}^{N-1} f(i,j) . a_{iu}.a_{jv} \qquad (1)$$

$$\text{avec} \quad c(u) = \frac{1}{\sqrt{2}} \quad \text{pour } u = 0 \quad \text{et} \quad c(v) = \frac{1}{\sqrt{2}} \quad \text{pour } v = 0$$

$$\text{et} \quad c(u) = 1 \quad \text{pour } u = 1, 2, ..., N-1 \quad \text{et} \quad c(v) = 1 \text{ pour } v = 1, 2, ..., N-1$$

$$\text{et avec } a_{iu} = \cos \frac{(2i+1).u.\pi}{2N} \quad \text{et } a_{j,v} = \cos \frac{(2j+1).v.\pi}{2N}$$

Les valeurs transformées inverses sont fournies par la transformation cosinus inverse bi-dimensionnelle en appliquant la formule suivante :

$$f(i,j) = \sum_{u=0}^{N-1} \sum_{v=0}^{N-1} c(u) . c(v) F.(u,v). a_{iu}.a_{jv} \qquad (2)$$

Cette transformation cosinus bi-dimensionnelle peut être décomposée en deux transformations cosinus mono-dimensionnelles et le calcul des transformées bi-dimensionnelles peut être réalisé au moyen de deux dispositifs de calcul de transformées mono-dimensionnelles, reliés en cascade.

La transformation cosinus mono-dimensionnelle est réalisée selon les formules suivantes:

$$\text{pour } k = 0, 1, 2, \ldots, N-1 \qquad F(k) = \frac{2}{N} c(k) . \sum_{i=0}^{N-1} a_{ik} . f(i) \qquad (3)$$

$$\text{avec} \quad c(k) = \frac{1}{\sqrt{2}} \text{ pour } k = 0$$

$$c(k) = 1 \text{ pour } k = 1, 2, \ldots, N-1$$

$$\text{et} \quad a_{ik} = \cos \frac{(2i+1).k.\pi}{2N}$$

La transformation cosinus inverse mono-dimensionnelle est réalisée selon les formules suivantes :

$$\text{pour } i = 0 \text{ à } N-1 \qquad f(i) = \sum_{k=0}^{N-1} b_{ik} . F(k) \qquad (4)$$

$$\text{avec} \quad b_{ik} = c(k) . \cos \frac{(2i+1).k.\pi}{2N} = c(k).a_{ik}$$

Le codage d'une image par la transformation cosinus suivie d'une pondération permet de réaliser une forte réduction de la quantité d'informations à transmettre mais a pour inconvénient de nécessiter de très nombreux calculs. Cette quantité de calculs est coûteuse en matériel et en temps de calcul. Elle rend très difficile l'application de la transformation cosinus au codage et au décodage d'une suite d'images vidéo à la fréquence habituelle, cinquante trames par seconde dans les standards européens.

On connaît des algorithmes rapides permettant de réaliser une transformation cosinus avec un nombre de multiplications et d'additions élémentaires relativement réduit, notamment l'algorithme de Chen et al qui est décrit notamment par R.A. Duryea dans l'article intitulé "Performance of a source/channel encoded imagery transmission system" Thesis AFIT/GE/EE/79D-12, Air Force Institute of Technology, OHIO décembre 1979. Il est déduit de la formule (3) précitée en mettant à profit les relations mathématiques existant entre les coefficients $a_{ik}$. Cet algorithme permet d'effectuer une transformation cosinus mono-dimensionnelle des valeurs numériques représentatives de 16 points d'image, par 44 multiplications et 74 additions. Il a été mis en oeuvre dans des dispositifs de calcul de transformées cosinus mono-dimensionnelles, mais cet algorithme présente l'inconvénient d'avoir une structure irrégulière se traduisant par une certaine complexité du dispositif de mise en oeuvre.

Le but de l'invention est de réaliser, pour un faible coût, un dispositif de calcul de transformées cosinus directes mono-dimensionnelles et un dispositif de calcul de transformées cosinus inverses mono-dimensionnelles ayant une structure plus simple que les dispositifs mettant en oeuvre l'algorithme de Chen et al, pour transformer des suites de 16 valeurs. Le but de l'invention est aussi de réaliser un dispositif de codage et un dispositif de décodage appliquant en temps réel la transformation cosinus bi-dimensionnelle à des images vidéo répondant aux standards de la télévision classique.

L'invention a notamment pour objet un dispositif de calcul de transformées cosinus directes mono-dimensionnelles et un dispositif de calcul de transformées cosinus inverses mono-dimensionnelles mettant en oeuvre deux algorithmes dérivés d'algorithmes connus, décrits par Beyeong Gi Lee dans "A new algorithm to compute the discrete cosine transform" - IEEE Trans. on Acoustic, Speech and Signal Processing. Vol.ASSP-32, n°6, pp1243-1245, December 1984. Ces algorithmes de Beyeong Gi Lee sont modifiés pour permettre leur mise en oeuvre par des dispositifs de calcul de transformées constitués essentiellement d'un petit nombre de mémoires vives et d'un petit nombre de dispositifs de calcul élémentaires réalisables au moyen de circuits intégrés disponibles dans le commerce, et pouvant fonctionner à un rythme égal au rythme d'analyse des points d'image dans les standards de la télévision classique.

L'invention a aussi pour objet un dispositif de codage et un dispositif de décodage d'images par la transformation cosinus bi-dimensionnelle, comportant deux dispositifs de calcul de transformées cosinus mono-dimensionnelles.

Selon l'invention, un dispositif de calcul de transformées cosinus directes mono-dimensionnelles, pour transformer des suites de 16 valeurs, est caractérisé en ce qu'il comporte :

- une mémoire d'entrée, pour stocker une suite de 16 valeurs à transformer ;
- des premiers moyens de calcul comprenant un circuit additionneur et un circuit soustracteur couplé à une première entrée d'opérande d'un circuit multiplicateur par l'intermédiaire d'un registre à décalage à $D_2$ positions de décalage pour calculer, à partir de deux valeurs binaires d'opérande A et B et d'une valeur de coefficient

$$D = 2^{D_2} x D_1$$

où $D_1$ est un nombre binaire de longueur déterminée appliquée sur la deuxième entrée d'opérande du circuit multiplicateur, deux valeurs $A + B$ et $(A-B).D$, pour que la valeur $(A-B)D$ obtenue soit toujours exprimée dans le même format binaire que la différence $A-B$;

- des premiers moyens de stockage de valeurs intermédiaires, couplés aux premiers moyens de calcul, pour leur fournir comme opérandes des valeurs qu'ils ont calculées antérieurement ;
- des seconds moyens de calcul pour calculer une valeur de la forme $E + G$, où E et G sont deux opérandes appliqués consécutivement à une entrée de ces seconds moyens de calcul ;
- des seconds moyens de stockage de valeurs intermédiaires, couplés aux seconds moyens de calcul pour leur fournir comme opérandes des valeurs qu'ils ont calculées antérieurement, et couplés à une borne de sortie du dispositif de calcul de transformées, pour lui fournir une suite de 16 valeurs transformées ;
- des moyens de commande commandant la mémoire d'entrée, les premiers et les seconds moyens de stockage de valeurs intermédiaires, les premiers et les seconds moyens de calcul, par des signaux de commande ayant un rythme double de celui des valeurs à transformer et ayant une période correspondant à une suite de 16 valeurs à transformer, et par un signal d'horloge ayant un rythme double de celui des valeurs à transformer.

Selon l'invention, un dispositif de calcul de transformées cosinus inverses mono-dimensionnelles, pour transformer une suite de 16 valeurs transformées directes, est caractérisé en ce qu'il comporte :

- des premiers moyens de calcul fournissant une valeur de la forme $E + G$, où E et G sont deux opérandes appliqués consécutivement à une entrée de ces premiers moyens de calcul ;
- des premiers moyens de stockage de valeurs intermédiaires, couplés à une entrée et à une sortie des premiers moyens de calcul pour leur fournir comme opérandes des valeurs qu'ils ont calculées antérieurement, et couplés à une borne d'entrée recevant les valeurs à transformer ;
- des seconds moyens de calcul pour calculer deux valeurs binaire de la forme $A + D.B$ et $A - D.B$, où A et B sont deux opérandes respectivement appliqués à deux entrées de ces seconds moyens de calcul, où D est un coefficient prédéterminé ; et où la valeur DB est obtenue par décalage dans un registre à décalage à $D_2$ positions de la valeur binaire B et multiplication de la valeur binaire décalée par un nombre $D_1$ par un circuit multiplicateur tel que

$$D = 2^{D_2} x D_1$$

de façon que les valeurs $A-DB$ et $A + DB$ obtenues soient toujours exprimées dans un même format binaire ;

- des seconds moyens de stockage de valeurs intermédiaires, couplés aux seconds moyens de calcul pour leur fournir comme opérandes des valeurs qu'ils ont calculées antérieurement, et couplés à une borne de sortie du dispositif de calcul de transformées inverses, pour fournir à cette borne de sortie une suite de 16 valeurs transformées inverses ;
- des moyens de commande commandant les premiers et les seconds moyens de stockage de valeurs intermédiaires, et les premiers et les seconds moyens de calcul, par des signaux de commande ayant un rythme double de celui des valeurs à transformer et ayant une période correspondant à une suite de 16 valeurs à transformer, et par un signal d'horloge ayant un rythme double de celui des valeurs à transformer.

L'invention sera mieux comprise et d'autres détails apparaîtront à l'aide de la description ci-dessous et des figures l'accompagnant :

- la figure 1 représente un diagramme de calcul des transformées cosinus mono-dimensionnelles directes pour une suite de 16 valeurs, selon l'algorithme de Beyeong Gi Lee ;
- les figures 2 et 3 représentent des opérations élémentaires qui sont extraites du diagramme de la figure 1 ;
- la figure 4 représente un diagramme de calcul des transformées cosinus mono-dimensionnelles directes pour une suite de 16 valeurs, selon l'algorithme de Beyeong Gi Lee modifié ;
- la figure 5 représente un schéma synoptique d'un exemple de réalisation d'un dispositif de calcul de transformées cosinus directes mono-dimensionnelles pour des blocs de 16 valeurs, selon l'invention ;
- la figure 6 représente un diagramme illustrant le fonctionnement d'une partie de cet exemple de réalisation ;
- la figure 7 représente un schéma synoptique plus détaillé de cet exemple de réalisation ;
- les figures 8, 9, 10 représentent des schémas synoptiques plus détaillés de certaines parties de cet exemple de réalisation ;
- la figure 11 représente le schéma synoptique d'un exemple de réalisation d'un dispositif de codage d'images comportant deux dispositifs de calcul de transformées cosinus mono-dimensionnelles selon l'invention ;
- la figure 12 représente le schéma synoptique d'un exemple de réalisation d'une variante de ce dispositif de codage d'images ;
- les figures 13 et 14 représentent le schéma synoptique d'exemples de réalisation de deux variantes du dispositif de calcul de transformées cosinus directes mono-dimensionnelles pour des blocs de 16 valeurs, selon l'invention ;
- la figure 15 représente un diagramme de calcul des transformées cosinus mono-dimensionnelles inverses pour une suite de 16 valeurs, selon l'algorithme de Beyeong Gi Lee ;
- la figure 16 représente un diagramme de calcul des transformées cosinus mono-dimensionnelles inverses pour une suite de 16 valeurs, selon l'algorithme de Beyeong Gi Lee, modifié ;
- la figure 17 représente une opération élémentaire extraite du diagramme de la figure 15 ;
- la figure 18 représente un schéma synoptique d'un exemple de réalisation d'un dispositif de calcul de transformées cosinus inverses mono-dimensionnelles pour des blocs de 16 valeurs, selon l'invention ;
- les figures 19 à 21 représentent des schémas synoptiques plus détaillés de certaines parties de cet exemple de réalisation ;
- la figure 22 représente le schéma synoptique d'un exemple de réalisation d'un dispositif de décodage d'image comportant deux dispositifs de calcul de transformées cosinus mono-dimensionnelles selon l'invention.

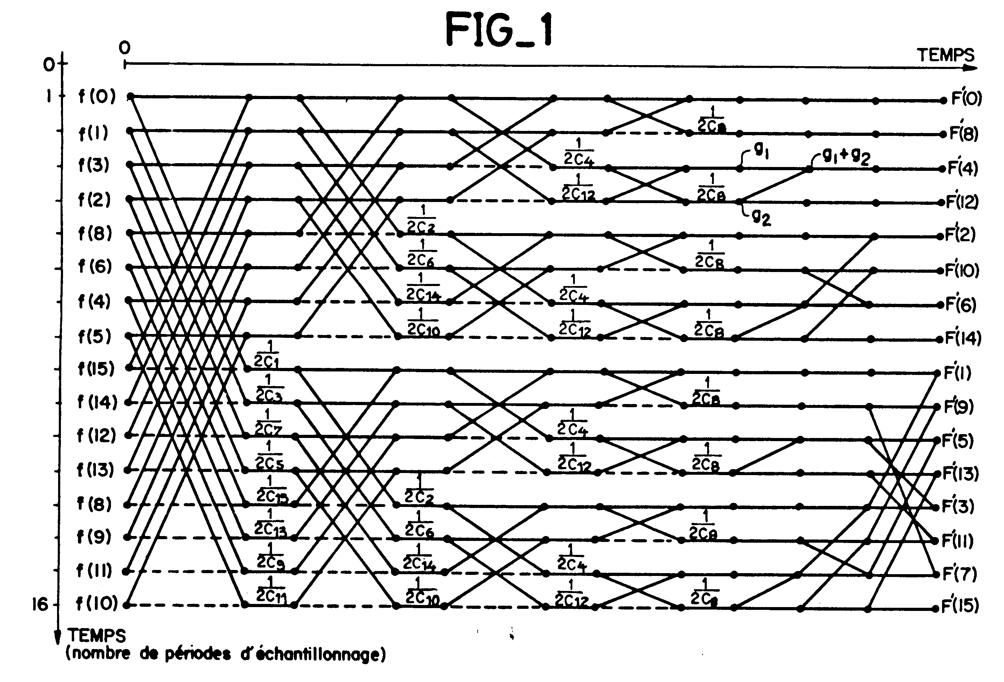

La figure 1 représente la répartition dans le temps de toutes les opérations de calcul réalisées selon l'algorithme de Beyeong Gi Lee. Ces opérations de calcul fournissent 16 valeurs F'(0), F'(1), ... , F'(15) qui sont égales, à un facteur près, aux 16 valeurs transformées F(0), F(1), ... , F(15) de 16 valeurs à transformer : f(0), f(15), f(7), f(8), f(3), f(12), f(4), f(11), f(1), f(14), f(6), f(9), f(2), f(13), f(5), f(10). Ce diagramme de calcul applique la formule (3), sans tenir compte des facteurs $\frac{2}{N} \cdot c(k)$, donc :

$$F'(k) = \frac{N}{2.c(k)} \times F(k)$$

Il apparaîtra dans la suite que la réalisation d'un dispositif de codage par transformation bi-dimensionnelle est plus simple si ces facteurs constants n'interviennent pas au cours du calcul mais seulement à la fin du calcul des transformées.

Les facteurs

$$\frac{N}{2.c(k)}$$

sont des constantes dont il sera tenu compte dans une étape ultérieure du calcul. Par la suite, on appellera valeurs transformées les valeurs F'(0), ... , F'(15) fournies par l'application de ce diagramme de calcul, bien qu'elles diffèrent des valeurs théoriques F(0), ... , F(15) données par la formule (3).

Ce diagramme comporte deux axes des temps : un axe horizontal orienté de gauche à droite et un axe vertical orienté de haut en bas, qui définissent l'ordre des opérations. Les 16 valeurs à transformer f(0), f(15), ... , f(10) sont disponibles successivement. Si, par exemple, elles représentent la luminance d'un bloc linéaire de 16 points d'une image, elles sont disponibles au rythme de l'échantillonnage de ces points d'image. Ces valeurs sont obtenues dans l'ordre (f0), f(1), ... , f(15) lors de l'échantillonnage. Elles sont mises ensuite dans l'ordre f(0), f(15), f(7), ... , f(10) pour pouvoir appliquer l'algorithme. Chaque valeur à transformer, chaque valeur intermédiaire, et chaque valeur transformée, est représentée par un point. Les opérations permettant d'obtenir les valeurs intermédiaires et les valeurs transformées sont représentées par des traits continus ou en pointillés. La convergence de deux traits continus symbolise une addition. La convergence d'un trait continu et d'un trait discontinu symbolise une soustraction. Un trait horizontal surmonté d'une valeur numérique symbolise une multiplication par cette valeur numérique, l'absence de valeur numérique symbolisant une transmission avec un coefficient 1.

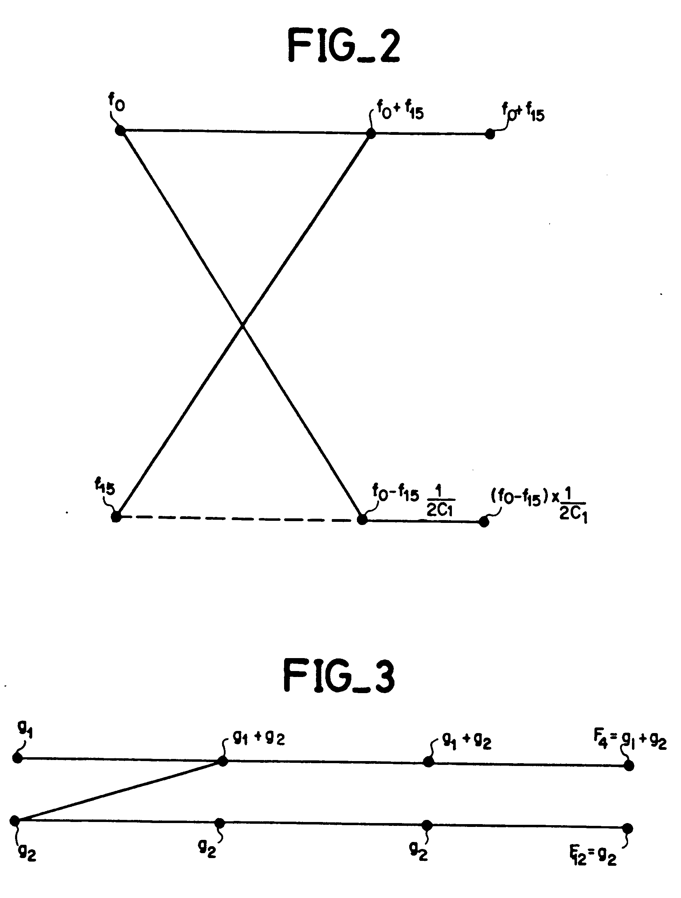

Les figures 2 et 3 sont des extraits de la figure 1, donnant des exemples d'opérations symbolisées sur cette figure 1. La figure 2 représente un extrait de la première ligne de calcul, correspondant à la valeur à transformer f(0), et de la neuvième ligne de calcul correspondant à la valeur à transformer f(15). Sur la ligne correspondant à f(0), la première valeur intermédiaire est égale à la somme de f(0) et de f(15) car le point représentant cette première valeur intermédiaire est relié par un trait continu au point représentant la valeur à transformer f(0) et par un trait continu à la valeur représentant f(15). La seconde valeur intermédiaire est, elle aussi, égale à f(0) + f(15) car elle est reliée par un trait continu non surmonté d'une valeur numérique, à la première valeur intermédiaire.

Sur la ligne de calcul correspondant à f(15), la première valeur intermédiaire est égale à f(0) - f(15) car le point la représentant est relié par un trait en pointillés au point représentant la valeur à transformer f(15), et par un trait continu à la valeur à transformer f(0). La seconde valeur intermédiaire sur la ligne correspondant à f(15) est égale à

$$(f(0) - f(15)) \times \frac{1}{2C_1}$$

car elle est reliée par un trait continu surmonté de la valeur

$$\frac{1}{2C_1}$$

au point représentant la seconde valeur intermédiaire, sur la ligne correspondant à f(15).

La figure 3 représente un extrait de la figure 1 correspondant à une partie des lignes de calcul fournissant les valeurs transformées F'(4) et F'(12). Seules les trois dernières valeurs intermédiaires de ces lignes sont représentées. Les calculs sont considérés à partir d'une première valeur intermédiaire $g_1$ et d'une première valeur intermédiaire $g_2$ respectivement. Sur la ligne correspondant à F'(4) la seconde valeur intermédiaire est égale à $g_1$ + $g_2$ car elle est reliée par des traits continus aux valeurs intermédiaires $g_1$ et $g_2$ . La troisième valeur intermédiaire sur cette même ligne, et la valeur transformée F'(4), sont égales à $g_1$ + $g_2$ car le calcul se réduit simplement à une transmission de la seconde valeur intermédiaire, sans retard. Sur la ligne correspondant à F'(12), la seconde valeur intermédiaire, la troisième valeur intermédiaire, et la valeur transformée F'(12) sont égales à $g_2$ car les calculs se réduisent à une transmission, sans retard.

L'ensemble des calculs représenté sur la figure 1 peut être réalisé par 32 multiplications et 81 additions. Sur le diagramme de la figure 1, les colonnes de valeurs séparent des colonnes d'opérations. L'observation de ce diagramme montre que la succession d'opérations à l'intérieur d'une colonne est différente dans chacune des colonnes d'opérations. La mise en oeuvre de cet algorithme nécessite donc une séquence d'opérations différente dans chacune des colonnes d'opérations, ce qui complique la réalisation du dispositif de mise en oeuvre.

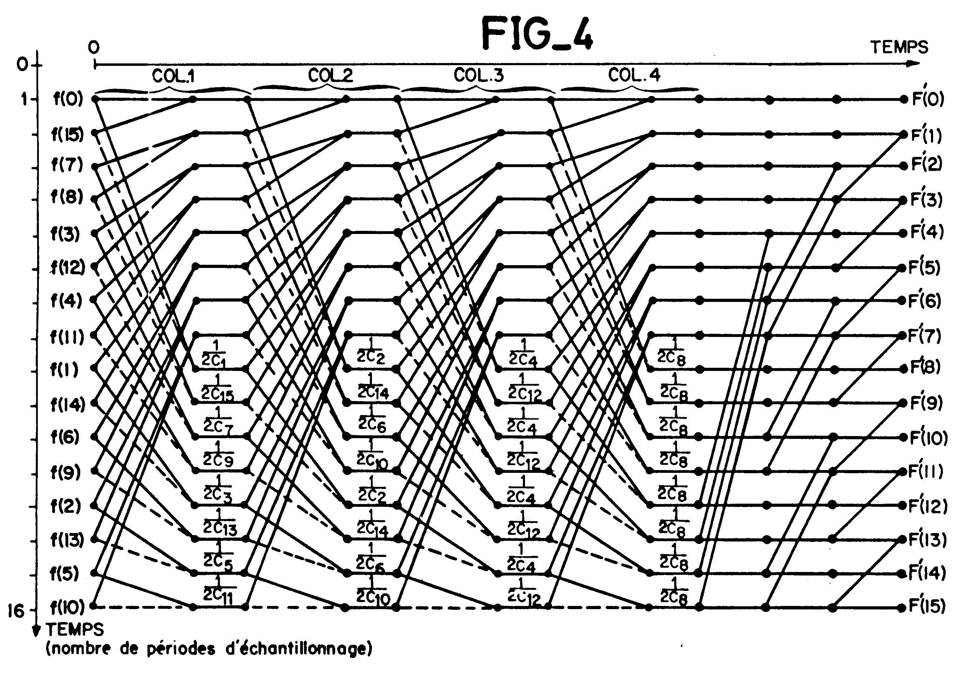

Dans le but de simplifier la réalisation du dispositif de mise en oeuvre, l'algorithme de Beyeong Gi Lee est modifié conformément à la figure 4. L'ordre des valeurs à transformer est modifié : f(0), f(15), f(7), f(8), f(3), f(12), f(4), f(11), f(1), f(14), f(6), f(9), f(2), f(13), f(5), f(10). Les lignes de points représentant les valeurs intermédiaires sont permutées de la même façon que les valeurs à transformer. Les liaisons entre les points représentant les valeurs à transformer, les valeurs intermédiaires, et les valeurs transformées sont maintenues au cours de ces permutations comme si les traits représentant ces liaisons étaient des fils élastiques.

L'ordre des valeurs transformées obtenu est donc modifié aussi : F'(0), F'(1), F'(2), F'(3), ... , F'(15). Il est à remarquer que les valeurs à transformer ne sont plus dans l'ordre des indices croissants mais, par contre, les valeurs transformées sont désormais dans l'ordre des indices croissants. La propriété la plus remarquable de ce diagramme modifié est qu'il comporte quatre colonnes de calculs COL 1, COL 2, COL 3, COL 4, qui sont identiques. D'autre part, chacune de ces colonnes de calcul est constituée de huit opérations telles que celle représentée sur la figure 2. Chacune de ces huit opérations permet d'obtenir une valeur de la forme A + B et une valeur de la forme (A - B) × D à partir d'un premier opérande de valeur A, d'un second opérande de valeur B, et d'un troisième opérande de valeur D qui est une constante prédéterminée.

La structure très répétitive de ce diagramme de calcul modifié permet donc d'obtenir 64 valeurs intermédiaires correspondant aux quatre colonnes d'opérations identiques, COL 1 à COL 4, au moyen d'un seul dispositif de calcul ayant une première et une seconde entrée d'opérande recevant deux valeurs A et B respectivement, ayant une entrée de troisième opérande recevant une valeur D et ayant deux sorties fournissant respectivement deux valeurs A + B et (A - B) × D. Si un tel dispositif de calcul fournit des couples de valeurs à un rythme double du rythme auquel sont disponibles les valeurs à transformer, alors un seul dispositif de calcul permet d'obtenir les 64 valeurs intermédiaires pendant la durée correspondant à 16 valeurs à transformer. Il en résulte donc une structure très simple du dispositif de calcul des transformées.

Les trois colonnes d'opérations situées à la droite du diagramme de calcul de la figure 4 comportent au total 17 additions. Certaines valeurs fournies par les 4 premières colonnes d'opérations sont transmises sans modification et sans retard pour constituer des valeurs transformées. C'est le cas des valeurs transformées : F'(0), F'(2), F'(12), F'(14), F'(15).

En outre, il est à remarquer que les autres valeurs transformées résultant de plusieurs additions situées dans les trois dernières colonnes d'opérations, peuvent être considérées comme résultant d'additions en chaîne, c'est-à-dire que le diagramme de calcul d'une telle valeur transformée comporte une ligne horizontale, indiquant la transmission d'une valeur intermédiaire obtenue précédemment sur la même ligne, et une ligne oblique indiquant l'addition d'une autre valeur intermédiaire obtenue sur une autre ligne.

Par exemple la valeur transformée F'(3) est obtenue à partir d'une valeur intermédiaire calculée sur la quatrième ligne du diagramme, ligne correspondant à F'(4), à laquelle est additionnée tout d'abord une valeur intermédiaire calculée sur la ligne correspondant à F'(7), puis à laquelle est additionnée une valeur intermédiaire calculée sur la ligne correspondant à la valeur transformée F'(5). Ces opérations d'additions en chaîne permettent d'obtenir une valeur intermédiaire, ou une valeur de transformée, en fournissant pour chaque addition un seul opérande à un additionneur, dès lors que la chaîne d'additions a été initialisée, ce qui est plus rapide et plus simple à réaliser que de fournir deux opérandes à un additionneur. Par exemple, pour réaliser une chaîne d'additions, telle que G + H + I + J, la première addition G + H nécessite deux périodes de calcul pour charger consécutivement les valeurs G et H, mais toutes les autres additions ne nécessitent qu'une seule période de calcul pour charger un nouvel opérande.

Cette deuxième particularité de la structure du diagramme de calcul permet elle aussi de simplifier le dispositif de mise en oeuvre de l'algorithme. Si un dispositif de calcul réalise des additions en chaîne à un rythme égal à deux fois celui où les valeurs à transformer sont disponibles, il peut aisément réaliser les 17 additions figurant sur le diagramme et fournir en sortie les 16 valeurs transformées, pendant la durée correspondant à 16 valeurs à transformer. Un seul dispositif de calcul réalisant des additions en chaîne sera alors suffisant.

A part le dispositif de calcul réalisant des opérations du type de celle représentée sur la figure 2 et le dispositif de calcul des additions en chaîne, il est nécessaire de prévoir des mémoires pour le stockage des valeurs intermédiaires qui constituent alternativement les résultats fournis par les dispositifs de calcul et les valeurs des opérandes appliquées à ces dispositifs de calcul.

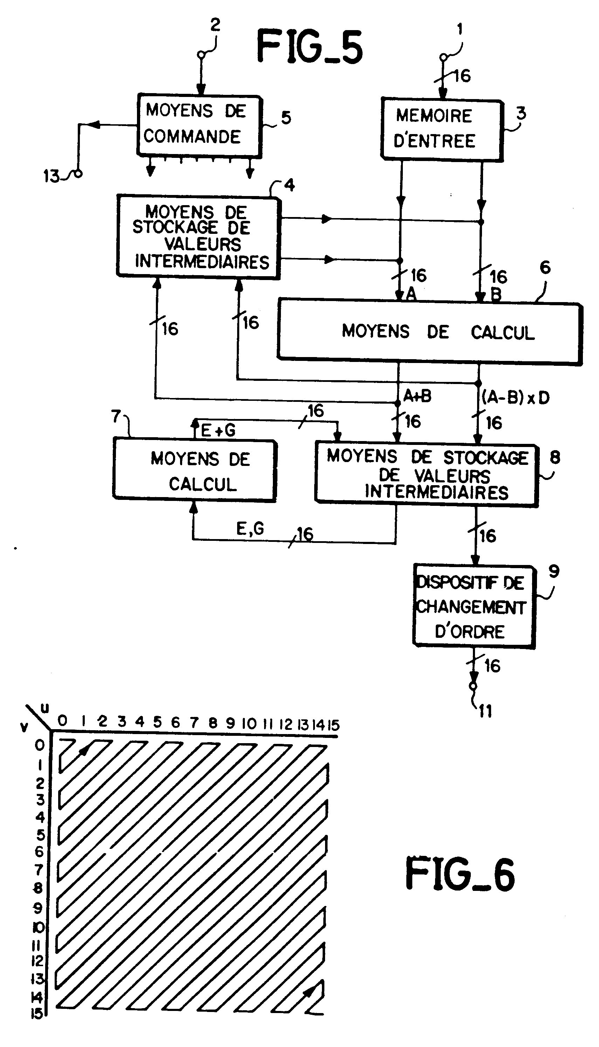

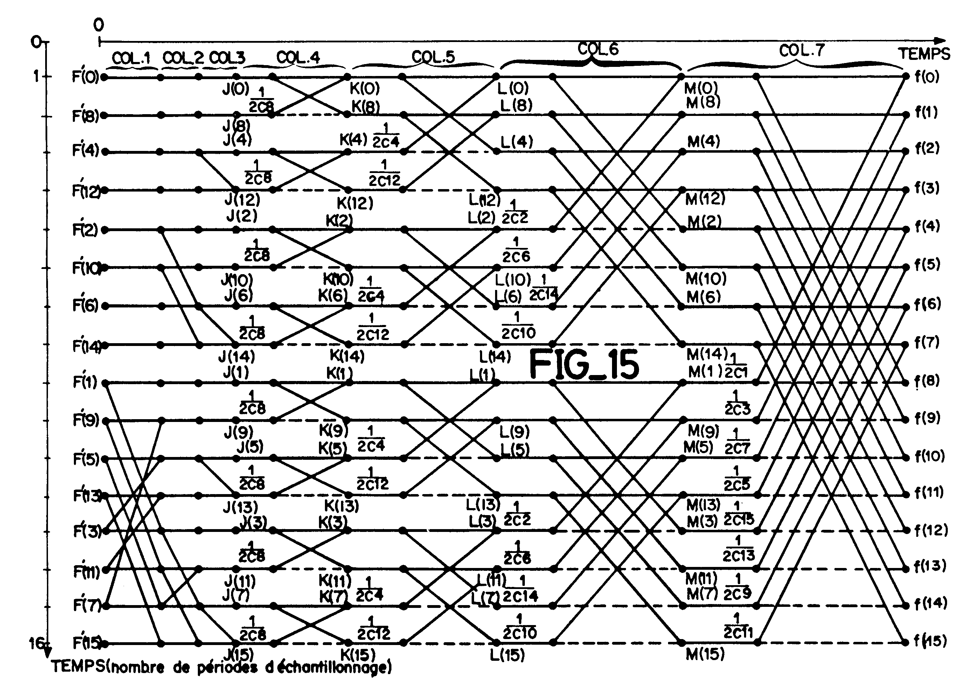

La figure 5 représente le schéma synoptique d'un exemple de réalisation d'un dispositif de calcul de transformées cosinus directes mono-dimensionnelles, selon l'invention. Cet exemple comporte : une borne d'entrée 1 recevant des suites de 16 valeurs numériques qui peuvent être des valeurs représentatives d'un bloc linéaire de 16 points images ou être 16 valeurs transformées cosinus directes mono-dimensionnelles fournies par un autre dispositif de calcul de transformées cosinus directes mono-dimensionnelles, deux dispositifs selon l'invention étant associés en série pour réaliser un dispositif de calcul de transformées cosinus directes bi-dimensionnelles ; une borne d'entrée 2 recevant un signal de synchronisation ; une mémoire d'entrée 3 ; des moyens de commande 5 ; des premiers et des seconds moyens de stockage de valeurs intermédiaires, 4 et 8 ; des premiers et des seconds moyens de calcul, 6 et 7 ; un dispositif de changement d'ordre 9 ; une borne de sortie 11 fournissant des suites de 16 valeurs transformées calculées selon le diagramme de calcul de la figure 14 ; et une borne de sortie 13 fournissant un signal de synchronisation.

8

EP 0 248 729 B1

La mémoire d'entrée 3 possède une entrée de données reliée à la borne d'entrée 1 pour recevoir chaque valeur à transformer, sous la forme d'un mot binaire de 16 bits, et possède deux sorties reliées respectivement à une première entrée d'opérande et à une seconde entrée d'opérande des moyens de calcul 6 pour lui fournir respectivement deux mots binaires de 16 bits. Les moyens 4 de stockage de valeurs intermédiaires possèdent une première et une seconde sortie reliées en parallèle avec les sorties de la mémoire d'entrée 3 à la première et à la seconde entrée d'opérande des moyens de calcul 6. Les sorties des moyens 4 et de la mémoire 3 peuvent prendre trois états dont un état à haute impédance permettant d'éviter les conflits entre ces sorties.

Les moyens de calcul 6 possèdent une première sortie reliée à une première entrée de données des moyens 4 et à une première entrée de données des moyens 8 et fournissant un mot binaire de 16 bits. Les moyens de calcul 6 possèdent aussi une seconde sortie reliée à une seconde entrée de données des moyens 4 et à une seconde entrée de données des moyens 8 et leur fournissant un mot binaire de 16 bits. Les moyens 8 possèdent : une troisième entrée de données reliée à une sortie des seconds moyens de calcul 7 pour recevoir un mot binaire de 16 bits ; une première sortie reliée à une entrée d'opérande des moyens de calcul 7 pour leur fournir un mot binaire de 16 bits ; et une seconde sortie reliée à une entrée du dispositif 9 de changement d'ordre pour lui fournir un mot binaire de 16 bits. Le dispositif 9 possède une sortie reliée à la borne de sortie 11 de l'exemple de réalisation représenté, pour lui fournir un mot binaire de 16 bits constituant une valeur transformée.

Les moyens de commande 5 sont reliés à la borne d'entrée 2 pour recevoir le signal de synchronisation. Dans cet exemple le dispositif étant destiné à faire partie d'un dispositif de codage par transformation cosinus bi-dimensionnelle, le signal de synchronisation correspond à 16 suites de 16 valeurs à transformer, c'est-à-dire à un bloc de 16 × 16 points d'image. Les moyens 5 possèdent une sortie reliée à la borne de sortie 13 pour fournir un signal de synchronisation correspondant à 16 suites de 16 valeurs transformées fournies par la borne de sortie 11. Ce signal de synchronisation permet de synchroniser un second dispositif de calcul de transformées cosinus directes mono-dimensionnelles ou bien un dispositif de codage et de transmission de valeurs transformées.

Les moyens de commande 5 possèdent aussi d'autres sorties, reliées par des liaisons non représentées, à des entrées de commande de la mémoire d'entrée 3, des moyens 4 et 8 de stockage de valeurs intermédiaires, des moyens de calcul 6 et 7, et du dispositif de changement d'ordre 9. Ils fournissent un signal d'horloge dont le rythme est deux fois plus élevé que le rythme auquel les valeurs à transformer sont appliquées à la borne d'entrée 1. Ils fournissent des signaux de commande selon un cycle dont la durée est égale à 32 périodes d'horloge et correspond à 16 valeurs à transformer, pour commander les moyens de calcul 6 et 7, les moyens de stockage 4 et 8, et la mémoire d'entrée 3 ; et ils fournissent des signaux de commande pour commander le dispositif 9, selon un cycle dont la durée est de 512 périodes d'horloge, ce qui correspond à 16 × 16 valeurs à transformer.

La mémoire d'entrée 3 a pour fonction de stocker une par une les valeurs à transformer et de les restituer deux par deux pour constituer les deux opérandes utilisés par les premiers moyens de calcul 6 pour réaliser les opérations représentées dans la première colonne COL 1 du diagramme de calcul de la figure 4. Les valeurs à tranformer sont appliquées dans l'ordre indiqué sur le diagramme de la figure 4 : f-(0), f(15), f(7), f(8), ... , f(10), qui n'est pas l'ordre d'analyse des points d'image correspondant. Les moyens d'échantillonnage, de numérisation, et de changement d'ordre des valeurs f(0), f(1), ... , f(15) ne sont pas représentés. Ils sont du domaine de la technique classique.

Les moyens 4 ont pour rôle de stocker deux par deux les valeurs intermédiaires fournies par les sorties des moyens de calcul 6 puis de les fournir aux deux entrées d'opérande des moyens de calcul 6 pour réaliser les opérations représentées dans la seconde colonne COL 2, la troisième colonne COL 3, et la quatrième colonne COL 4, des opérations représentées sur la figure 4. Les moyens de calcul 6 fournissent respectivement sur leurs deux sorties des valeurs de la forme $A + B$ et $(A - B) \times D$ lorsque deux valeurs de la forme A et B ont été appliquées respectivement sur leurs deux entrées d'opérande. La valeur D du troisième opérande est une constante sélectionnée par un signal de commande fourni par les moyens 5.

Les moyens 8 ont pour rôle de stocker les couples de valeurs intermédiaires fournies par les deux sorties des moyens de calcul 6 puis de fournir ces valeurs individuellement soit à l'entrée des moyens de calcul 7 soit à l'entrée du dispositif de changement d'ordre 9. Les moyens 8 stockent aussi des valeurs intermédiaires fournies par les moyens de calcul 7 à la troisième entrée de données des moyens 8.

9

Le dispositif de changement d'ordre 9 réalise un changement d'ordre des valeurs transformées fournies par la seconde sortie des moyens 8 de stockage de valeurs intermédiaires. Le changement d'ordre dépend de l'utilisation ultérieure des valeurs transformées. Le dispositif 9 stocke 16 suites de 16 valeurs transformées, qui sont calculées ligne après ligne d'après le tableau suivant :

| colonne n° 0 | 1 | 2 | ... | j | ... | 15 |
|---|---|---|---|---|---|---|
| **ligne** | | | | | | |
| **n° 0** $F'^0(0),$ | $F'^0(1),$ | $F'^0(2),$ | ... | ... | ... | $F'^0(15)$ |
| **1** $F'^1(0),$ | ... | ... | | | | $F'^1(15)$ |
| **2** $F'^2(0),$ | | | | ... | | $F'^2(15)$ |
| **3** $F'^3(0),$ | | | | ... | | $F'^3(15)$ |
| : ... | | | | ... | | ... |
| i ... | ... | ... | ... | $F'^i(j)$ | ... | ... |
| : | | | | | | |

Si les valeurs transformées sont appliquées à un second dispositif de calcul de transformées cosinus directes mono-dimensionnelles, en vue d'obtenir des transformées cosinus directes bi-dimensionnelles, le changement d'ordre a deux buts :
- lire les valeurs de ce tableau, colonne par colonne,
- et lire les valeurs de chaque colonne dans l'ordre attendu par le second dispositif de calcul, c'est-à-dire l'ordre des valeurs à transformer indiqué sur le diagramme de la figure 4 : $F'^0(0)$, $F'^{15}(0)$, $F'^7(0)$, $F'^8(0)$, ... , $F'^{10}(0)$, puis $F'^0(1)$, $F'^{15}(1)$, ... , $F'^{10}(1)$, puis $F'^0(2)$, ... etc. Le second dispositif de calcul de transformées a alors une mémoire identique à la mémoire d'entrée 3.

Dans le cas où cet exemple de réalisation constitue le second dispositif de calcul de transformées cosinus mono-dimensionnelles, sa borne de sortie 11 fournit des valeurs transformées F'(u,v) dans un ordre adapté pour les traitements ultérieurs, généralement destinés à réduire la quantité d'informations représentant une image. Cet ordre adapté est en général l'ordre défini par la figure 6 et qui est dit ordre zig-zag. Cet ordre correspond à un classement des valeurs transformées selon les valeurs de u et v croissantes, ce qui correspond à des valeurs absolues statistiquement décroissantes pour les valeurs transformées.

Le choix du format des valeurs est particulièrement important pour la réalisation du dispositif selon l'invention. Les moyens de calcul 6 et 8 travaillent sur des valeurs ayant un format prédéterminé : 13 bits pour la partie entière et 3 bits pour la partie décimale. Ce format a été déterminé en calculant un majorant pour chacune des valeurs intermédiaires et pour chacune des valeurs transformées rencontrées sur le diagramme de la figure 4, en fonction d'un majorant des valeurs à transformer. Lorsque celles-ci sont constituées par des valeurs de luminance, elles sont codées sur 8 bits et sont comprises entre 0 et + 255. Les valeurs intermédiaires et les valeurs transformées ont alors pour majorants + 4080 et - 2778. Pour éviter tout débordement du format, ces valeurs de majorants conduisent à choisir un format de 13 bits pour la partie entière, parmi lesquels un bit dédié au signe. Comme, d'autre part, les circuits multiplicateurs disponibles dans le commerce traitent couramment des valeurs de 16 bits, un format de 3 bits pour la partie décimale a été choisi.

Un dispositif de calcul de transformées cosinus bi-dimensionnelles comporte, en série, deux dispositifs de calcul de transformées mono-dimensionnelles. Un premier dispositif reçoit des valeurs à transformer qui sont des valeurs de luminance comprises entre 0 et + 255 et qui sont représentées par 8 bits. Pour éviter tout débordement du format au cours des calculs, ces 8 bits constituent les 8 bits de plus faible poids parmi les 13 bits réservés à la partie entière des valeurs appliquées à la borne d'entrée 1.

Un second dispositif, identique au premier, mis à part pour le fonctionnement du dispositif de changement d'ordre 9, reçoit des valeurs à transformer qui sont constituées par les transformées cosinus mono-dimensionnelles F'(u), pour u = 1 à 15, fournies par la borne de sortie 11 du premier dispositif. Ces

valeurs F'(u) ont le format prédéterminé, comportant 13 bits pour la partie entière, dont le bit de signe, et 3 bits pour la partie décimale. F'(0) est comprise entre 0 et + 4080 et F'(u) pour u = 1 à 15 est comprise entre - 1442 et + 1442, sans tenir compte des coefficients $\frac{2}{N}$ .c(k).

Ces valeurs ne sont pas dans la fourchette 0, + 255 considérée précédemment pour déterminer le format des valeurs dans l'ensemble du premier dispositif de calcul de transformées mono-dimensionnelles. Il est possible de ramener ces valeurs dans cette fourchette au moyen d'une division par 16. La valeur F'(u) divisée par 16 est comprise alors dans la fourchette 0, + 255 et la valeur F'(u) pour u = 1 à 15 est comprise entre - 127 et + 127, ce qui est équivalent pour le format, car il suffit alors de 8 bits dans les deux cas. Les valeurs fournies par le premier dispositif peuvent donc être ramenées dans une fourchette 0, + 255 ou - 127, + 127, pour éviter tout débordement des valeurs intermédiaires ou des valeurs transformées, au moyen d'un décalage de 4 bits à droite. La virgule reste devant les 3 bits de la partie décimale.

D'autre part, le format des valeurs à transformer défini précédemment pour le premier dispositif de calcul de transformées cosinus mono-dimensionnelles, ne comporte pas de partie décimale, autrement dit la virgule est fixée à droite du bit de plus faible poids. Quand une valeur F'(u) comportant 3 bits de valeur décimale est appliquée à cette entrée, tout se passe comme si sa virgule était décalée de 3 bits à droite, autrement dit la valeur est multipliée par 8.

Compte tenu de ces deux remarques, le changement de format entre les deux dispositifs de calcul de transformées mono-dimensionnelles provoque donc une division par 2 de la valeur transmise. Cette division par 2 sera compensée par l'opération de normalisation, en même temps que seront pris en compte les coefficients

$$\frac{2.c(k)}{N}.$$

Cette opération de normalisation est réalisée après la seconde transformation directe mono-dimensionnelle.

Ainsi dans les deux dispositifs de calcul de transformées mono-dimensionnelles les calculs sont réalisés avec un même format fixé. Ces calculs fournissent des résultats moins précis que des calculs avec virgule flottante, mais ils peuvent être réalisés au moyen de circuits beaucoup plus simples, plus rapides, moins chers, et plus faciles à intégrer.

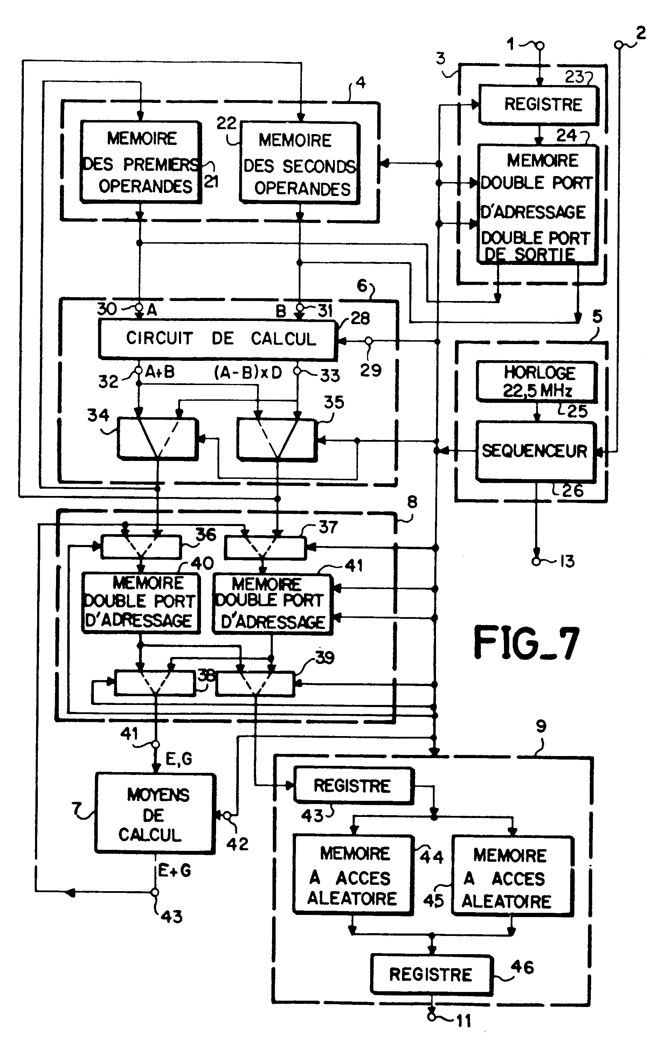

La figure 7 représente un schéma synoptique plus détaillé de l'exemple de réalisation représenté sur la figure 5. Les moyens de commande 5 sont constitués d'une horloge 25 de fréquence 22,5 MHz et d'un séquenceur 26. Dans cet exemple, une image est échantillonnée à une fréquence de 13,5 MHz mais les valeurs représentatives des points de cette image sont fournies au dispositif de calcul de transformées à une fréquence de 11,25 MHz car le temps de suppression entre les lignes d'image est récupéré. La fréquence de l'horloge 25 est le double de la fréquence à laquelle les valeurs à transformer sont apppliquées à la borne d'entrée 1. Une sortie de l'horloge 25 est reliée à une entrée du séquenceur 26. Le séquenceur 26 fournit des signaux de commande à l'ensemble du dispositif de calcul de transformées avec une période égale à 32 périodes de l'horloge 25. Il est synchronisé par le signal de synchronisation appliqué à la borne d'entrée 2 et indiquant le début de chaque bloc de 16 suites de 16 valeurs à transformer. Une sortie du séquenceur 26 fournit à la borne de sortie 13 un signal de synchronisation utilisable pour synchroniser un second dispositif de calcul de transformées cosinus directes mono-dimensionnelles. Une sortie multiple du séquenceur 26 fournit les signaux de commande nécessaires à tous les éléments constituant le dispositif de calcul de transformées.

La mémoire d'entrée 3 est constituée d'un registre 23 ayant une capacité d'un mot de 16 bits, et d'une mémoire vive 24 : ayant un port d'entrée de données relié à une sortie du registre 23, un premier et un second port de sortie de données constituant les deux sorties des moyens 3, un double port d'adressage relié à la sortie multiple des moyens de commande 5 et permettant de sélectionner respectivement les données sortant par les deux ports de sortie, et des entrées de commande reliées à la sortie multiple des moyens de commande 5, pour commander une lecture ou une écriture. Le registre 23 possède une entrée d'horloge reliée à la sortie multiple des moyens de commande 5 pour recevoir un signal de commande ayant une période égale à deux périodes d'horloge.

La mémoire 24 est constituée de quatre circuits intégrés Am 29707 fabriqués par la société AMD. Elle permet une lecture simultanée de deux données sélectionnées respectivement par les deux ports d'adressage ou elle permet une lecture et une écriture simultanées à deux adresses sélectionnées respectivement par les deux ports d'adressage, ou encore elle permet deux lectures respectivement aux deux adresses sélectionnées par le double port d'adressage et simultanément une écriture à une adresse sélectionnée par l'un des ports d'adressage. Ce type de mémoire permet donc de lire et d'écrire simultanément à une même adresse. Il permet donc de stocker et de restituer simultanément un flot continu de valeurs à transformer appliquées à la borne d'entrée 1. La mémoire 24 stocke 16 valeurs à transformer, au rythme où elles sont disponibles sur la borne d'entrée 1, pendant la durée de 32 périodes d'horloge, et restitue 8 valeurs sur chacun des deux ports de sortie pendant la durée de huit périodes d'horloge.

Ces 8 couples de valeurs sont utilisées par les moyens de calcul 6 pour calculer 16 premières valeurs intermédiaires, pendant 8 premières périodes d'horloge. Ensuite, pendant les 24 périodes d'horloge suivantes les moyens 6 reçoivent des valeurs intermédiaires fournies par les deux sorties des moyens 4 de stockage de valeurs intermédiaires. Pendant les 8 premières périodes d'horloge, dans chaque cycle de 32 périodes d'horloge, la mémoire 24 travaille simultanément en lecture et en écriture. Au cours de deux périodes d'horloge successives, parmi ces 8 premières périodes, une écriture et une lecture sont réalisées pendant une période d'horloge, à une première adresse, puis une lecture est réalisée à une seconde adresse pendant la période suivante. L'ordre de lecture des valeurs dans la mémoire 24 est fixé par l'algorithme de calcul, c'est : f(0), f(15), f(7), f(8), f(3), ... , f(10), comme indiqué sur la figure 4. L'écriture devant être réalisée à une même adresse que la lecture, mais à un rythme deux fois plus lent, les valeurs à transformer doivent donc être appliquées à la borne d'entrée 1 dans l'ordre : f(0), f(7), f(3), f(4), f(1), f(6), f-(2), f(5) puis f(15), f(8), f(12), f(11), f(14), f(5), f(13), f(10).

Les moyens 4 de stockage de valeurs intermédiaires sont constitués de deux mémoires distinctes, 21 et 22, stockant séparemment les premiers opérandes et les seconds opérandes qui sont à appliquer respectivement à la première et à la seconde entrée d'opérande des moyens de calcul 6. Chacune des mémoires 21 et 22 est constituée de quatre circuits intégrés Am 29707 et peut stocker 16 mots de 16 bits. Chacune de ces mémoires comporte un seul port d'entrée de données et un seul port de sortie. Les ports d'entrée de données des mémoires 21 et 22 constituent les deux entrées de données des moyens 4 et les ports de sortie constituent les deux sorties de données des moyens 4. Un port d'adressage de la mémoire 21 et un port d'adressage de la mémoire 22 sont reliés en parallèle à la sortie multiple des moyens de commande 5. Des entrées de commande de lecture et d'écriture des mémoires 21 et 22 sont reliées aussi à la sortie multiple des moyens de commande 5.

Les moyens 4 sont constitués de deux mémoires distinctes 21 et 22 parce qu'ils doivent stocker simultanément deux valeurs qui sont fournies simultanément par les moyens de calcul 6 et fournir simultanément deux valeurs d'opérandes aux moyens de calcul 6. Il serait possible d'utiliser une seule mémoire à double port d'entrée et double port de sortie mais une mémoire de ce type n'a pas une rapidité suffisante dans cette application, en l'état actuel de la technologie.

Les moyens de calcul 6 comportent un circuit de calcul 28 et deux multiplexeurs 34 et 35 à deux entrées et une sortie. Le circuit de calcul 28 possède deux bornes d'entrée 30 et 31 constituant la première et la seconde entrée d'opérande des moyens 6, une borne d'entrée de commande 29 reliée à la sortie multiple des moyens de commande 5, et deux bornes de sortie 32 et 33. La borne de sortie 32 est reliée à une première entrée du multiplexeur 34 et à une première entrée du multiplexeur 35. La borne de sortie 33 est reliée à une seconde entrée du multiplexeur 34 et à une seconde entrée du multiplexeur 35. La sortie du multiplexeur 34 et la sortie du multiplexeur 35 constituent respectivement la première et la seconde sortie des moyens 6. Le multiplexeur 34 et le multiplexeur 35 possèdent respectivement deux entrées de commande reliées en parallèle à la sortie multiple des moyens de commande 5.

Le circuit de calcul 28 fournit sur ses bornes de sortie 32 et 33 respectivement un premier résultat de la forme A + B et un second résultat de la forme (A - B) $\times$ D lorsqu'un premier opérande de la forme A et un second opérande de la forme B sont appliqués respectivement à la borne d'entrée 30 et à la borne d'entrée 31. Dans la suite des calculs, un résultat fourni par la borne 32 est utilisé soit comme premier opérande, appliqué à la borne d'entrée 30 après avoir été restitué par les moyens 4, soit comme second opérande appliqué à la borne d'entrée 31 après avoir été restitué par les moyens 4. Sur la figure 4, il apparaît que les valeurs intermédiaires situées sur les huit premières lignes dans les premières colonnes du diagramme de calcul sont du type A + B alors que les valeurs intermédiaires situées sur les huit dernières lignes sont du type (A - B) $\times$ D.

Une valeur intermédiaire sur deux constitue ensuite le premier opérande et une valeur intermédiaire sur deux constitue ensuite un second opérande pour le circuit de calcul 28. Par conséquent, les résultats de la forme A + B doivent être stockés alternativement dans la mémoire 21 des premiers opérandes et alternativement dans la mémoire 22 des seconds opérandes. De même, pour les résultats de la forme (A - B) $\times$ D. Les moyens de commande 5 commandent donc les multiplexeurs 34 et 35 afin d'aiguiller les résultats fournis par le circuit de calcul 28 alternativement vers la mémoire 21 et vers la mémoire 22. Il est à noter que les multiplexeurs 34 et 35 ne seraient pas nécessaires si les moyens 4 étaient constitués d'une seule mémoire à double port d'entrée et à double port de sortie.

12

Il est à remarquer aussi que dans le diagramme de calcul correspondant à l'algorithme de Beyeong Gi Lee modifié, représenté sur la figure 4, les valeurs intermédiaires successives de haut en bas sont alternativement du type A et B. La lecture de 16 opérandes dans les moyens 4 est donc bien répartie au cours des huit périodes d'horloge. Par contre, chaque opération réalisée par le circuit de calcul 28 fournit deux résultats qui sont simultanément des futurs opérandes du type A ou simultanément des futurs opérandes du type B. Pour éviter d'avoir à écrire simultanément deux résultats du type A dans la mémoire 21, et alternativement deux résultats du type B dans la mémoire 22, le circuit de calcul 28 retarde d'une période d'horloge le résultat de type A + B fourni par sa borne de sortie 32 afin de réaliser successivement l'écriture des deux résultats de même type, fournis par chaque opération du circuit de calcul 28.

Les moyens de calcul 8 comportent : quatre multiplexeurs, 36 à 39, équivalent chacun à un commutateur à un circuit et à deux positions ; deux mémoires vives, 40 et 41, à accès aléatoire, à double port d'adressage. Une première entrée du multiplexeur 36 et une première entrée du multiplexeur 37 constituent respectivement la première et la seconde entrée des moyens de calcul 8. Une seconde entrée du multiplexeur 36 et une seconde entrée du multiplexeur 37 sont reliées ensemble et constituent la troisième entrée des moyens de calcul 8. Une sortie du multiplexeur 36 et une sortie du multiplexeur 37 sont reliées respectivement à une entrée de données de la mémoire 40 et à une entrée de données de la mémoire 41. Une sortie de la mémoire 40 est reliée à une première entrée du multiplexeur 38 et à une première entrée du multiplexeur 39. Une sortie de la mémoire 41 est reliée à une seconde entrée du multiplexeur 38 et à une seconde entrée du multiplexeur 39. Une sortie du multiplexeur 38 et une sortie du multiplexeur 39 constituent respectivement la première et la seconde sortie des moyens de calcul 8.

Les multiplexeurs 36 à 39 possèdent chacun une entrée de commande reliée à une sortie des moyens de commande 5. Les mémoires 40 et 41 possèdent chacune deux ports d'adressage et une entrée de commande de lecture et d'écriture reliés à une sortie des moyens de commande 5. Chacune de ces mémoires est constituée de quatre circuits intégrés du type AM 29707 permettant de stocker 16 mots de 16 bits. La présence des deux mémoires 40 et 41 permet de stocker simultanément deux valeurs qui sont fournies simultanément par les deux sorties des moyens de calcul 6. Ainsi il est possible de stocker 16 valeurs en huit périodes d'horloge. Les deux sorties des moyens de stockage 8 permettent de fournir simultanément une valeur aux moyens de calcul 7 et une valeur au dispositif 9 de changement d'ordre. Ainsi le dispositif 9 peut recevoir 16 valeurs transformées pendant que les moyens de calcul 7 peuvent recevoir 16 valeurs intermédiaires, nécessaires au calcul de 17 additions, pendant la durée d'un cycle de 32 périodes d'horloge. L'aiguillage des valeurs reçues sur les entrées des moyens de stockage 8 et des valeurs à acheminer vers les sorties des moyens de stockage 8 est réalisé au moyen d'une suite de signaux de commande fournis par les moyens de commande 5 avec une période correspondant à 32 périodes d'horloge.

Le dispositif 9 de changement d'ordre est constitué de deux registres 43 et 46 pouvant stocker une valeur de 16 bits, et deux mémoires vives à accès aléatoire, 44 et 45. Les registres 43 et 46 constituent respectivement un tampon d'entrée et un tampon de sortie reliés respectivement à l'entrée de données du dispositif 9 et à la borne de sortie 11. La sortie du registre 43 est reliée à une entrée de données de la mémoire 44 et à une entrée de données de la mémoire 45. Une entrée du registre 46 est reliée à la fois à une sortie de la mémoire 44 et à une sortie de la mémoire 45. La mémoire 44 et la mémoire 45 possèdent chacune une entrée d'adresse et des entrées de commande de lecture et d'écriture reliées respectivement à la sortie multiple des moyens de commande 5 par des liaisons non représentées sur la figure 7. Les mémoires 44 et 45 sont constituées chacune de 4 circuits intégrés Cy 7C122 fabriqués par Cypress et ayant une capacité de $256 \times 4$ bits.

Les valeurs transformées sont stockées dans le dispositif 9 au fur et à mesure qu'elles sont disponibles, puis elles sont restituées par le dispositif 9 dans un ordre différent. Les moyens de commande 5 fournissent aux entrées d'adresses des mémoires 44 et 45 respectivement deux suites de valeurs d'adresse correspondant à ces deux ordres différents. Ils fournissent à l'une des mémoires, 44 ou 45, des signaux de commande d'écriture et ils fournissent à l'autre mémoire des signaux de commande de lecture, alternativement avec une période correspondant à $16 \times 16$ valeurs. Il est à remarquer que les valeurs transformées sont inscrites au rythme où elles sont disponibles, c'est-à-dire avec un rythme égal au rythme d'horloge, alors qu'elles sont restituées à un rythme égal au rythme où les valeurs à transformer sont appliquées à la borne d'entrée 1, c'est-à-dire avec un rythme deux fois plus faible que le rythme de l'horloge utilisée pour les calculs.

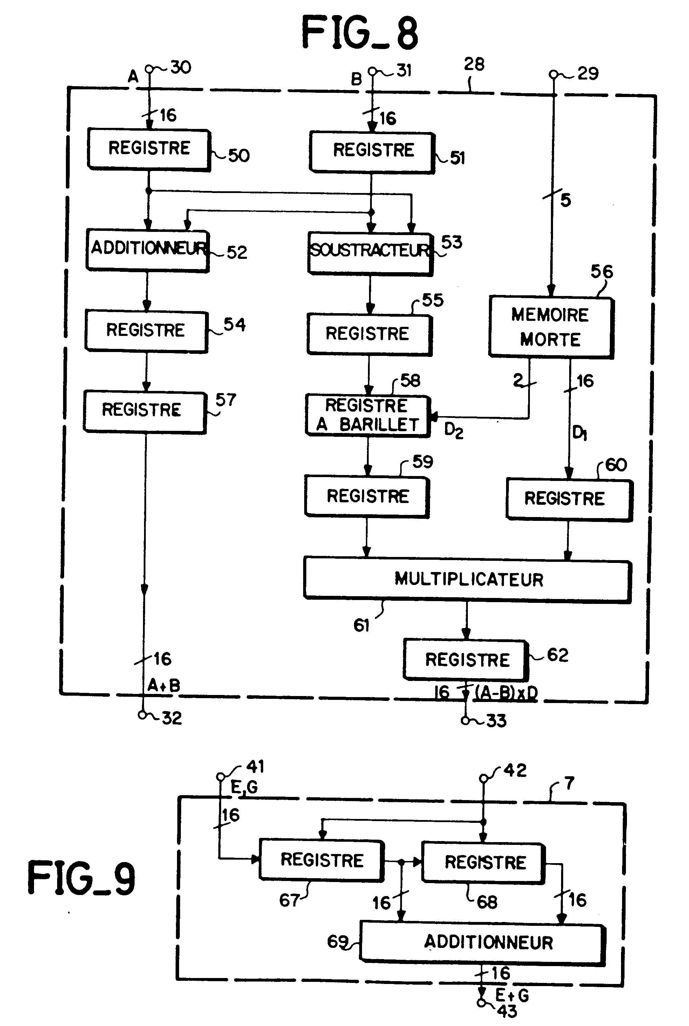

La figure 8 représente un schéma synoptique d'un exemple de réalisation du circuit de calcul 28. Ce circuit de calcul comporte : huit registres pouvant stocker un mot de 16 bits, 50, 51, 54, 55, 57, 59, 60, 62 ; un additionneur 52 ; un soustracteur 53 ; un registre à barillet 58 ; une mémoire morte 56 ; un multiplicateur 61. Les bornes d'entrée 30 et 31 sont reliées respectivement à une entrée du registre 50 et à une entrée du registre 51 pour leur fournir un premier mot de 16 bits constituant un premier opérande A et un second mot de 16 bits constituant un second opérande B. La sortie du registre 50 est reliée à une première entrée de l'additionneur 52 et à une première entrée du soustracteur 53. La sortie du registre 51 est reliée à une seconde entrée de l'additionneur 52 et à une seconde entrée du soustracteur 53. La sortie de l'additionneur 52 est reliée à une entrée du registre 54. Une sortie du registre 54 est reliée à une entrée du registre 57. Une sortie du registre 57 est reliée à la borne de sortie 32 pour lui fournir un mot binaire de 16 bits représentant le résultat A + B.

La sortie du soustracteur 53 est reliée à une entrée du registre 55. Une sortie du registre 55 est reliée à une entrée de données du registre à barillet 58. Le registre à barillet 58 permet de décaler un mot de 16 bits, d'un nombre de bits variable déterminé par un mot binaire appliqué sur une entrée de commande. Ce mot binaire comporte deux bits et est fourni par une première sortie de la mémoire morte 56. Une sortie du registre à barillet 58 est reliée à une entrée du registre 59. Une sortie du registre 59 est reliée à une première entrée du multiplicateur 61. La mémoire morte 56 possède une seconde sortie reliée à une entrée du registre 60 pour lui fournir un mot de 16 bits, $D_1$, et possède une entrée de commande reliée à la borne d'entrée 29 pour recevoir un mot binaire de 5 bits constituant une adresse pour cette mémoire morte 56. Une sortie du registre 60 est reliée à une seconde entrée du multiplicateur 61. Une sortie du multiplicateur 61 est reliée à une entrée du registre 62. Une sortie du registre 62 est reliée à la borne de sortie 33 pour lui fournir un mot binaire de 16 bits représentant le résultat (A - B) × D. Chacun des registres du circuit de calcul 28 possède une entrée d'horloge, non représentée, recevant le signal d'horloge produit par les moyens de commande 5.

La multiplication par la valeur prédéterminée D est réalisée, d'une part, au moyen du registre à barillet 58 produisant un décalage de 0, ou 1, ou 2, ou 3 bits, et, d'autre part, au moyen du multiplicateur 61. La mémoire morte 56 fournit d'une part un mot binaire $D_2$ de deux bits indiquant la valeur du décalage à réaliser par le registre à barillet 58 et, d'autre part, un mot binaire $D_1$ de 16 bits constituant un opérande appliqué à la seconde entrée du multiplicateur 61. La valeur de D est

$$2^{D_2} \times D_1.$$

Au cours des calculs représentés sur le diagramme de la figure 4, il est nécessaire de réaliser des multiplications par les coefficients suivants :

$$\frac{1}{2C_1} = 0,50220 \qquad \frac{1}{2C_9} = 0,78809$$

$$\frac{1}{2C_2} = 0,50977 \qquad \frac{1}{2C_{10}} = 0,89990$$

$$\frac{1}{2C_3} = 0,52246 \qquad \frac{1}{2C_{11}} = 1,06055$$

$$\frac{1}{2C_4} = 0,54102 \qquad \frac{1}{2C_{12}} = 1,30640$$

$$\frac{1}{2C_5} = 0,56689 \qquad \frac{1}{2C_{13}} = 1,72241$$

$$\frac{1}{2C_6} = 0,60132 \qquad \frac{1}{2C_{14}} = 2,56274$$

$$\frac{1}{2C_7} = 0,64673 \qquad \frac{1}{2C_{15}} = 5,10107$$

$$\frac{1}{2C_8} = 0,70703$$

Il apparaît que les coefficients

$$\frac{1}{2C_1} \text{ à } \frac{1}{2C_{10}}$$

sont compris entre 0,5 et 1. Leur représentation avec 0 bit pour la partie entière et 16 bits pour la partie décimale permet de conserver un seul et même format pour tous les calculs dans le dispositif de calcul de transformées. En effet, après la multiplication par une valeur représentée au moyen de 13 bits pour la partie entière et de 3 bits pour la partie décimale, le résultat a un format comportant 13 bits pour la partie entière et 19 bits pour la partie décimale, qui redonne un format de 13 bits pour la partie entière et 3 bits pour la partie décimale après avoir réalisée une troncature limitée aux 16 bits de poids les plus forts. Cette conservation du format de 13 bits pour la partie entière et de 3 bits pour la partie décimale, tout au long des calculs, permet de simplifier la gestion des additionneurs et des soustracteurs.

Par contre, les coefficients

$$\frac{1}{2C_{11}} \text{ à } \frac{1}{2C_{15}}$$

sont supérieurs à 1. Ceci pose un problème car la multiplication d'un de ces coefficients par une valeur représentée dans un format comportant 3 bits pour la partie entière et 13 bits pour la partie décimale fournirait un résultat dont le format comporterait 16 bits pour la partie entière et 16 bits pour la partie décimale. Ce résultat aurait donc un format de 16 bits pour la partie entière et de 0 bits pour la partie décimale après une troncature limitée aux 16 bits de poids les plus forts. Il y aurait donc à la suite d'une telle multiplication, une perte du format comportant 13 bits pour la partie entière et 3 bits pour la partie décimale. Le passage du format comportant 13 bits pour la partie entière et 3 bits pour la partie décimale, au format comportant 16 bits pour la partie entière et 0 bit pour la partie décimale, provoquerait une perte de précision car le format comportant 13 bits pour la partie entière et 3 bits pour la partie décimale a été choisi pour pouvoir représenter le majorant de toutes les valeurs numériques rencontrées au cours du calcul, et donc un format de 16 bits pour la valeur entière est superflu.

Compte tenu de ces remarques, une multiplication par les coefficients

$$\frac{1}{2C_{11}} \text{ à } \frac{1}{2C_{15}}$$

est réalisée, d'une part, en effectuant un décalage de 1, 2, ou 3 bits à gauche sur la valeur à multiplier, pour multiplier cette valeur par 2, 4, ou 8, et, d'autre part, en multipliant la valeur ainsi obtenue par un coefficient

$$\frac{1}{2C_{11}} , \dots , \frac{1}{2C_{15}} ,$$

divisé au préalable par 2 ou 4, ou 8, respectivement.

Pour multiplier par les coefficients

$$\frac{1}{2C_{11}} , \text{ ou } \frac{1}{2C_{12}} , \text{ ou } \frac{1}{2C_{13}} ,$$

le décalage réalisé est de 1 bit à gauche et les valeurs du coefficient appliqué à la seconde entrée du multiplicateur 61 sont

$$\frac{1}{2} \times \frac{1}{2C_{11}} ,$$

ou,

$$\frac{1}{2} \times \frac{1}{2C_{12}} , \text{ ou } \frac{1}{2} \times \frac{1}{2C_{13}} ,$$

respectivement.

Pour multiplier une valeur par

$$\frac{1}{2C_{14}} ,$$

un décalage de deux bits à gauche est réalisé par le registre à barillet 58 et une multiplication par

$$\frac{1}{4} \times \frac{1}{2C_{14}}$$

est réalisée par le multiplicateur 61.

Pour multiplier une valeur par

$$\frac{1}{2C_{15}} ,$$

16

un décalage de trois bits à gauche est réalisé par le registre à barillet 58 et une multiplication par

$$\frac{1}{8} \times \frac{1}{2C_{15}}$$

est réalisée par le multiplicateur 61. La mémoire 56 stocke 15 mots de 18 bits, chaque mot comportant deux bits commandant un décalage, éventuellement nul, et 16 bits traduisant la valeur du coefficient à appliquer à la seconde entrée du multiplicateur 61.

Il est à remarquer qu'entre la borne d'entrée 30 et la borne de sortie 32 les valeurs traversent trois registres 50, 54, 57, alors qu'entre la borne d'entrée 31 et la borne de sortie 33 les valeurs numériques traversent quatre registres, 51, 55, 59, 62. Ainsi les résultats du type $(A - B) \times D$ sont retardés d'une période d'horloge par rapport aux résultats du type $A + B$, pour permettre de stocker successivement et non pas simultanément ces deux résultats dans la mémoire des premiers opérandes 21 ou dans la mémoire des seconds opérandes 22, alternativement.

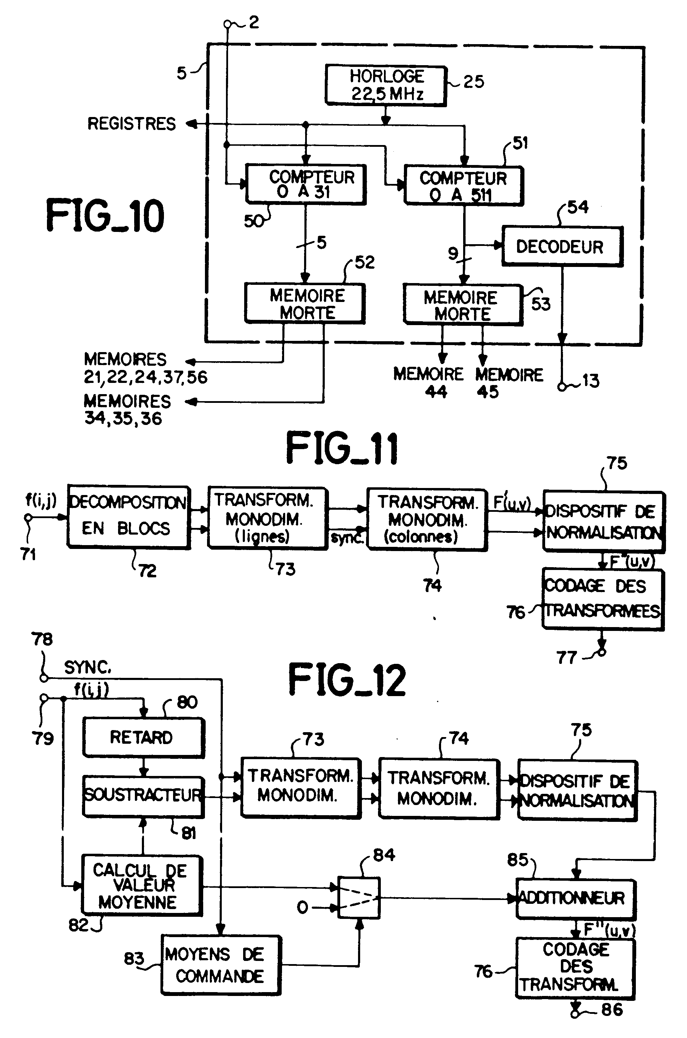

La figure 9 représente le schéma synoptique d'un exemple de réalisation des moyens de calcul 7. Ceux-ci comportent deux registres, 67 et 68, ayant une capacité d'un mot de 16 bits, et un additionneur 69. Une entrée de données du registre 67 est reliée à la borne d'entrée 41 pour recevoir un mot de 16 bits. Une sortie du registre 67 est reliée à une entrée de données du registre 68 et à une première entrée de l'additionneur 69. Une sortie du registre 68 est reliée à une seconde entrée de l'additionneur 69. Chacun des registres 67 et 68 possède une entrée d'horloge reliée à la borne d'entrée 42 pour recevoir le signal d'horloge fourni par les moyens de commande 5. L'additionneur 69 a une sortie reliée à la borne de sortie 43 pour lui fournir un mot de 16 bits. Les registres 67 et 68 sont reliés en série pour fournir simultanément à l'additionneur 69 deux valeurs qui sont appliquées successivement sur la borne d'entrée 41. Par exemple, une somme de la forme $E + G$ est calculée en appliquant successivement E puis G à la borne d'entrée 41 au cours de deux périodes successives du signal d'horloge. Pour calculer une somme de la forme $(E + G) + H$, il suffit d'appliquer successivement E, puis G, puis H à la borne d'entrée 41 au cours de trois périodes successives du signal d'horloge.

Dans cet exemple de réalisation, le multiplicateur 61 est constitué d'un circuit intégré Am 29517A fabriqué par la société AMD. Les additionneurs 52 et 69 sont constitués chacun de circuits intégrés 74F374, 74F381, et 74F182, fabriqués par la société AMD. Le soustracteur 53 est constitué des mêmes circuits intégrés.

La figure 10 représente un schéma synoptique plus détaillé des moyens de commande 5. Ceux-ci comportent : l'horloge 25, déjà mentionnée précédemment ; un compteur binaire 50, comptant de 0 à 31 ; un compteur binaire 51, comptant de 0 à 511 ; une mémoire morte 52 ; une mémoire morte 53 ; et un décodeur 54. Les compteurs 50 et 51 possèdent une entrée d'horloge reliée à LA sortie de l'horloge 25, et une entrée de remise à zéro reliée à la borne d'entrée 2 recevant le signal de synchronisation correspondant à 16 suites de 16 valeurs à transformer. Le compteur 51 possède une sortie reliée à une entrée d'adresse de la mémoire morte 53 et à une entrée du décodeur 54. Cette sortie fournit un mot de 9 bits résultant du comptage. Une sortie du décodeur 54 fournit un signal de synchronisation correspondant au début d'un bloc de $16 \times 16$ valeurs transformées, lorsque le compteur 51 a compté 64 périodes d'horloge. Cette sortie est reliée à la borne de sortie 13. Une sortie du compteur 50 est reliée à une entrée de la mémoire morte 52 pour lui fournir un mot de 5 bits. La mémoire morte 52 possède des sorties fournissant des valeurs d'adresse et des signaux de commande de lecture et d'écriture aux mémoires 24, 21, 22, 37, 56 et des signaux de commande aux multiplexeurs 34, 35, 36. La mémoire morte 53 possède des sorties fournissant des adresses aux mémoires 44 et 45, ainsi que des signaux de commande de lecture et d'écriture.

La figure 11 représente le schéma synoptique d'un exemple de réalisation d'un dispositif de codage d'images selon l'invention. Ce dispositif comporte, en série, deux dispositifs de calcul de transformées cosinus directes mono-dimensionnelles, 73 et 74, réalisés selon la description précédente. Le dispositif de codage d'images représenté sur la figure 11 comporte une borne d'entrée 71 recevant une suite de valeurs numériques f(i,j) représentant les valeurs de luminance des points d'images. Ces valeurs sont appliquées à l'entrée d'un dispositif 72 de décomposition d'une image en blocs de $16 \times 16$ points correspondant à des blocs de $16 \times 16$ valeurs de luminance. Le dispositif 72 fournit, pour chaque bloc, seize suites de 16 valeurs, chaque suite correspondant à une portion de ligne d'image, et fournit un signal de synchronisation de bloc, au dispositif 73 de calcul de transformées. Le dispositif de codage d'images comporte aussi un dispositif de normalisation 75, un dispositif 76 de codage des transformées, et une borne de sortie 77, fournissant une suite de valeurs transformées, codées de façon à réduire la quantité d'informations.

Les bornes d'entrée 71 et 72 sont reliées respectivement à une entrée de valeurs à transformer et à une entrée de synchronisation du dispositif 73. Le dispositif 73 possède une sortie de valeurs transformées et une sortie de synchronisation reliées respectivement à une entrée de valeurs à transformer et à une entrée de synchronisation du dispositif 74. Le dispositif 74 possède une sortie de valeurs transformées et une sortie de synchronisation, reliées respectivement à une première et seconde entrée du dispositif de normalisation 75. Le dispositif 74 fournit une suite de valeurs transformées F'(u,v) au dispositif 75. Le dispositif de normalisation 75 possède une sortie reliée à une entrée du dispositif 76 de codage des transformées pour lui fournir une suite de valeurs F''(u,v) constituées par les valeurs transformées multipliées par des coefficients prédéterminés appelés coefficients de normalisation.

Les dispositifs 73 et 74 de calcul de transformées cosinus directes mono-dimensionnelles réalisent chacun une suite de calculs correspondant au diagramme représenté sur la figure 4. Ils fournissent donc des valeurs transformées F'(u,v) qui doivent être multipliées chacune par un coefficient prédéterminé pour obtenir les valeurs transformées théoriques définies par la formule (1).

$$F'(u,v) = \sum_{i=0}^{15} \sum_{j=0}^{15} f(i,j).\cos\frac{(2j+1).v.\pi}{32}.\cos\frac{(2i+1).u.\pi}{32} \qquad (5)$$

alors que la valeur théorique est:

$$F(u,v) = 4\frac{c(u).c(v)}{N^2} c(u).c(v) \sum_{i=0}^{15} \sum_{j=0}^{15} f(i,j).\cos\frac{(2j+1).v.\pi}{32} . \cos\frac{(2i+1).u.\pi}{32} \qquad (6)$$

donc pour N = 16 la valeur théorique est :

$$F(u,v) = \tfrac{1}{64} c(u).c(v).F'(u,v) \qquad (7)$$

En pratique, il est sans importance de ne pas obtenir la valeur théorique F(u,v), par contre il faut restituer, après le décodage, une valeur exacte f(i,j).

Pour décoder une image il est nécessaire d'appliquer la transformation cosinus inverse aux valeurs transformées directes. La transformation cosinus inverse est définie par la formule (2) mentionnée précédemment. Le calcul des transformées inverses peut être réalisé selon l'algorithme de Beyeong Gi Lee, en inversant les axes des temps sur le diagramme de calcul représenté à la figure 1. Les valeurs ainsi obtenues sont égales aux valeurs transformées inverses f(i,j) définies par la figure 2, à un facteur près, qui dépend de la valeur considérée. D'après la formule (2), pour des blocs de 16 × 16 valeurs la valeur exacte de chaque transformée inverse est :

$$f(i,j) = \sum_{u=0}^{15} \sum_{v=0}^{15} c(u).c(v) . F(u,v).\cos\frac{(2j+1).v.\pi}{32} . \cos\frac{(2i+1).u.\pi}{32} \qquad (8)$$

$$\text{avec } C(x) = \frac{1}{\sqrt{2}}$$

pour x = 0 et C(x) = 1 pour x ≠ 0. Cette valeur f(i,j) peut être exprimée en fonction de la valeur F'(u,v) obtenue en appliquant deux fois l'algorithme de Beyeong Gi Lee, et représentée par la formule (5) :

$$f(i,j) = \sum_{u=0}^{15} \sum_{v=0}^{15} \frac{1}{64} C^2(u).C^2(v).F'(u,v).\cos\frac{(2j+1).v.\pi}{32} .\cos\frac{(2i+1).u.\pi}{32} \qquad (9)$$

Dans l'hypothèse, où le décodage est réalisé en appliquant à F'(u,v) deux fois l'algorithme de Beyeong Gi Lee inversé, les valeurs obtenues sont de la forme :

$$\sum_{u=0}^{15} \sum_{v=0}^{15} F'(u,v).\cos \frac{(2j+1).v.\pi}{32} .\cos \frac{(2i+1).u.\pi}{32} \qquad (10)$$

Pour que ces valeurs soient égales aux valeurs f(i,j) des transformées inverses exactes, il suffit que les valeurs F'(u,v) fournies par le dispositif 74 soit multiplées par :

$$\frac{1}{64} \times C^2(u) \times C^2(v) = \quad \frac{1}{256} \text{ pour } u = 0 \text{ et } v = 0 ;$$

$$\frac{1}{128} \text{ pour } u \neq 0 \text{ et } v = 0, \text{ et pour } u = 0 \text{ et } v \neq 0 ;$$

$$\frac{1}{64} \quad \text{pour } u \neq 0 \text{ et } v \neq 0$$

Le dispositif de normalisation 75 doit donc être intercalé entre les dispositifs 73, 74 de calcul de transformées cosinus directes et les dispositifs de calcul de transformées cosinus inverses, et doit réaliser les multiplications suivantes :

$$F(0,0) \times \frac{1}{256}$$

$$F(0,u) \times \frac{1}{128}$$

$$F(u,0) \times \frac{1}{128}$$

$$F(u,v) \times \frac{1}{64}$$

Les coefficients de multiplication sont tous des puissances de 2, ce qui permet de réaliser ces multiplications au moyen d'un simple décalage des bits dans un registre à barillet. Au contraire, si la multiplication par

$$\frac{2.c(k)}{N}$$

était réalisée dans chacun des dispositifs de calcul de transformées mono-dimensionnelles cette multiplication serait compliquée à réaliser, car

$$c(0) = \frac{1}{\sqrt{2}}$$

n'est pas une puissance entière de 2.

Comme il a été mentionné précédemment, le changement de format de la sortie d'un premier dispositif de calcul de transformées mono-dimensionnelles à l'entrée d'un second, provoque une division par 2 de chaque valeur transmise, donc pour compenser cette division par 2 le dispositif de normalisation doit réaliser en fait les multiplications suivantes :

$$F''(0,0) = F'(0,0) \times \frac{1}{128}$$
$$F''(0, u \neq 0) = F'(0, u \neq 0) \times \frac{1}{64}$$
$$F''(v \neq 0, 0) = F'(v \neq 0, u) \times \frac{1}{64}$$
$$F''(u \neq 0, v \neq 0) = F'(u \neq 0, v \neq 0) \times \frac{1}{32}$$

La réalisation du dispositif de normalisation 75 est à la portée de l'homme de l'art. Il peut être constitué d'un registre à barillet ayant une capacité de 16 bits et permettant un décalage de 2 bits, ou de 1 bit, ou de 0 bit vers la droite, compte tenu d'un décalage fixe de 5 bits correspondant à la multiplication par $\frac{1}{32}$ qui est un facteur commun à toutes les valeurs F'(u,v). Le nombre de bits de décalage est commandé par un dispositif de comptage recevant un signal d'horloge fourni par une horloge commune aux dispositifs 73 et 74, et remis à zéro par un signal de synchronisation fourni par le dispositif 74 lorsqu'il fournit chaque suite de 16 × 16 valeurs transformées F'(u,v).

Le dispositif 76 de codage des transformées a pour fonction de réduire la quantité d'informations à transmettre. Il peut être réalisé conformément à la description donnée par :

IEEE Transactions on Communications, VOL.COM-32, N°3, March 1984, "Scene Adaptive Coder" de WEN-HSIUNG CHEN et WILLIAM K. PRATT.

Ce codage consiste à comparer la valeur de chaque transformée par rapport à une valeur de seuil ; à considérer comme nulles les transformées inférieures à la valeur de seuil ; à transmettre la valeur des transformées, non nulles, par un code de Huffman et à transmettre les adresses de ces transformées dans leurs matrices au moyen d'un codage par plages, la longueur des plages étant codée elle-même au moyen d'un codage de Huffman. Seule la première valeur, F''(0,0), de la matrice des transformées est transmise en valeur absolue.

La figure 12 représente le schéma synoptique d'une variante de ce dispositif de codage d'image. Cette variante comporte des éléments supplémentaires destinés à améliorer la précision du calcul des transformées, les autres éléments étant inchangés et portant les mêmes références numériques que sur la figure 11. Cette variante comporte : une borne d'entrée 78 recevant un signal de synchronisation pour chaque suite de 16 × 16 valeurs de luminance ; une borne d'entrée 79 recevant ces suites de valeurs à transformer ; un dispositif 82 de calcul d'une valeur moyenne pour chaque suite de 16 × 16 valeurs de luminance ; un dispositif à retard 80 procurant un retard égal au temps de calcul du dispositif 82 ; un soustracteur 81 ; deux dispositifs de calcul de transformées cosinus directes mono-dimensionnelles, 73 et 74 ; un dispositif de normalisation 75 ; un multiplexeur 84 à deux entrées et une sortie ; des moyens 83 de commande de ce multiplexeur 84 ; un additionneur 85 ; un dispositif 76 de codage des transformées ; et une borne de sortie 86.

La borne d'entrée 79 est reliée à une entrée du dispositif à retard 80 et à une entrée du dispositif 82 de calcul d'une valeur moyenne. Le soustracteur 81 a une première entrée reliée à une sortie du dispositif à retard 80, une seconde entrée reliée à une sortie du dispositif 82, et une sortie reliée à l'entrée des valeurs à transformer du dispositif 73. La sortie du dispositif de calcul 82 est reliée aussi à une première entrée du multiplexeur 84. Le multiplexeur 84 possède aussi : une seconde entrée recevant une valeur nulle permanente, une entrée de commande reliée à une sortie des moyens de commande 83, et une sortie reliée à une première entrée de l'additionneur 85.

La borne d'entrée 78, recevant le signal de synchronisation, est reliée à des entrées de synchronisation du dispositif 73 et des moyens 83. Une sortie de valeurs transformées du dispositif 73 est reliée à une entrée de valeurs à transformer du dispositif 74. Une sortie de synchronisation du dispositif 73 est reliée à une entrée de synchronisation du dispositif 74. Une sortie de valeurs transformées du dispositif 74 est reliée à une entrée du dispositif de normalisation 75. Une sortie de synchronisation du dispositif 74 est reliée à une entrée de synchronisation du dispositif 75. Une sortie du dispositif de normalisation 75 est reliée à une seconde entrée de l'additionneur 85. Une sortie de ce dernier est reliée à une entrée du dispositif 76 de codage des transformées. Une sortie du dispositif 76 est reliée à la borne de sortie 86.

Le soustracteur 81 permet de soustraire à chacune des valeurs de luminance d'un bloc de 16 × 16 points d'image, la valeur moyenne de ces valeurs de luminance. Les dispositifs 73 et 74 traitent alors des valeurs à transformer ayant une dynamique plus réduite, ce qui permet d'augmenter la précision des calculs ou bien permet de réduire le nombre de bits utilisés pour représenter les valeurs à transformer. Dans de dernier cas, les dispositifs de calcul sont plus simples.

A la sortie du dispositif de normalisation 75 l'additionneur 85 permet de retrouver une valeur $F''(0,0)$ exacte en additionnant la valeur moyenne fournie par le dispositif de calcul 82 à la première valeur transformée fournie par le dispositif de normalisation 75 pour chacun des blocs de 16 × 16 points d'image. Pour les autres valeurs fournies par le dispositif de normalisation 75, l'additionneur 85 reçoit une valeur nulle à la place de la valeur moyenne, grâce au multiplexeur 84 et aux moyens de commande 83. Les moyens de commande 83 commandent le multiplexeur 84 en fonction du rang de la valeur transformée fournie par le dispositif de normalisation 75. Les moyens 83 comportent un dispositif de comptage recevant le signal d'horloge des dispositifs 73 et 74, et remis à zéro au moyen du signal de synchronisation reçu par la borne d'entrée 78.

Pour coder des images de télévision en couleurs il suffit de prévoir deux dispositifs de codage identiques dont l'un traite les valeurs de luminance et dont l'autre traite une suite de valeurs de différence de couleurs, les valeurs de la différence de couleur rouge étant intercalées avec les valeurs de différence de couleur bleue, puisque le nombre total de valeurs de différence de couleur est égal au nombre total de valeurs de luminance selon les normes habituelles pour la numérisation des signaux de luminance et des signaux de différence de couleur.

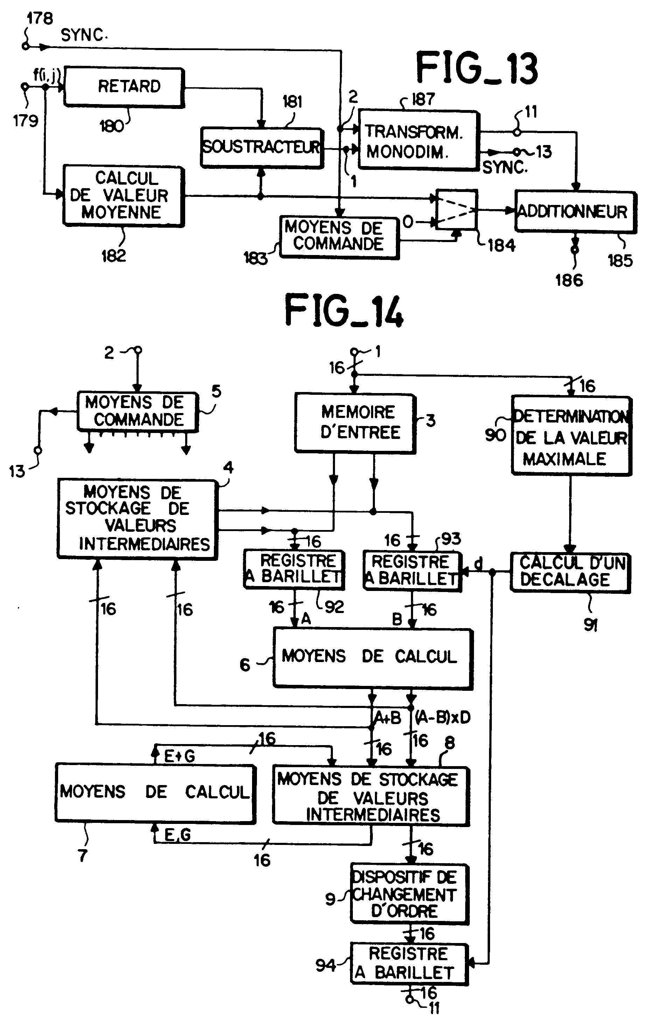

La figure 13 représente le schéma synoptique d'une variante de réalisation du dispositif de calcul de transformées cosinus mono-dimensionnelles selon l'invention. Cette variante a une précision améliorée par des moyens semblables aux moyens qui viennent d'être décrits. Elle comporte : un dispositif 187 de calcul de transformées cosinus mono-dimensionnelles semblable à celui représenté sur la figure 7 et il comporte en outre : un dispositif 182 de calcul d'une valeur moyenne d'un bloc de 16 valeurs à transformer ; un dispositif à retard 180, procurant un retard égal au temps de calcul du dispositif 182 ; un soustracteur 181 ; un multiplexeur 184 ; des moyens 183 de commande du multiplexeur 184 ; et un additionneur 185. Une borne d'entrée 179 est reliée à une entrée du dispositif à retard 180 et à une entrée du dispositif 182 de calcul d'une valeur moyenne, pour leur fournir des suites de 16 valeurs à transformer $f(i,j)$. Le soustracteur 181 a une première entrée reliée à une sortie du dispositif à retard 180, une seconde entrée reliée à une sortie du dispositif 182, et une sortie reliée à une borne d'entrée 1 du dispositif 187 pour lui fournir des valeurs à transformer. La sortie du dispositif de calcul 182 est reliée aussi à une première entrée du multiplexeur 184. Le multiplexeur 184 possède aussi : une seconde entrée recevant une valeur nulle permanente, une entrée de commande reliée à une sortie des moyens de commande 183, et une sortie reliée à une première entrée de l'additionneur 185. Une seconde entrée de l'additionneur 185 est reliée à une borne de sortie 11 du dispositif 187 et une sortie est reliée à une borne de sortie 186 pour lui fournir des suites de 16 valeurs transformées mono-dimensionnelles.

Une borne d'entrée 178, recevant un signal de synchronisation correspondant au début de chaque suite de 16 valeurs à transformer, est reliée à une entrée de synchronisation du dispositif 187 et à une entrée de synchronisation des moyens 183. Une borne de sortie 13 du dispositif 187 fournit un autre signal de synchronisation correspondant au début de chaque suite de 16 valeurs transformées fournies par la borne de sortie 186.

Le soustracteur 181 permet de soustraire à chacune des valeurs d'une suite de 16 valeurs à transformer, la valeur moyenne de celles-ci. Le dispositif 187 traite alors des valeurs à transformer ayant une dynamique réduite, ce qui permet d'augmenter la précision des calculs ou bien permet de réduire le nombre de bits utilisés pour représenter les valeurs à transformer. Dans ce dernier cas, le dispositif de calcul 187 peut être simplifié.

A la sortie du dispositif 187 l'additionneur 185 permet de retrouver une valeur $F'(0,0)$ exacte en additionnant la valeur moyenne fournie par le dispositif de calcul 182 à la première valeur transformée fournie par le dispositif 187, pour chaque suite de 16 valeurs transformées. Pour les autres valeurs de chaque suite de 16 valeurs transformées fournies par le dispositif 187, l'additionneur 185 reçoit une valeur nulle à la place de la valeur moyenne, grâce au multiplexeur 184 et aux moyens de commande 183. Ces derniers commandent le multiplexeur 184 en fonction du rang de la valeur transformée fournie par le dispositif 187. Ils comportent un dispositif de comptage recevant le signal d'horloge du dispositif 187, et qui est remis à zéros au moyen du signal de synchronisation reçu par la borne d'entrée 178.

Une amélioration supplémentaire de la précision de calcul des transformées mono-dimensionnelles peut être obtenue en déterminant le format des valeurs non plus en fonction d'un majorant des valeurs à transformer mais en fonction de la valeur maximale effective de ces valeurs à transformer. Il est alors possible de décaler les bits représentant ces valeurs le plus possible à gauche tout en évitant les risques de débordement au cours des calculs. Naturellement, un décalage opposé doit être réalisé en sortie du dispositif de calcul de transformées mono-dimensionnelles pour revenir à un format déterminé.

La figure 14 représente le schéma synoptique d'un exemple de réalisation qui est une variante de l'exemple de réalisation représenté sur la figure 5 et qui comporte des éléments supplémentaires permettant une amélioration de la précision par ce moyen. Ces éléments supplémentaires sont : trois registres à barillet, 92, 93, et 94 ; un dispositif 90 de détermination de la valeur maximale dans une suite de 16 valeurs à transformer ; et un dispositif 91 de détermination d'un décalage. Le dispositif 90 possède une entrée reliée à la borne d'entrée 1 pour recevoir les suites de 16 valeurs à transformer. Il possède une sortie reliée à une entrée du dispositif 91. Ce dernier calcule le nombre de bits, d, d'un décalage à réaliser en entrée des moyens de calcul 6 et tel que les valeurs traitées à l'intérieur des moyens de calcul 6 ne dépassent jamais la capacité de ces moyens de calcul 6.

Ainsi le format des valeurs appliquées aux moyens de calcul 6 n'est plus fixe mais est variable en fonction de la valeur maximale effective parmi les 16 valeurs d'une suite de valeurs à transformer. Le décalage calculé par le dispositif 91 est réalisé au moyen des registres à barillet 92 et 93 qui sont intercalés entre les deux ports de sortie de la mémoire d'entrée 3 et les deux entrées d'opérande des moyens de calcul 6. Ces registres 92 et 93 sont commandés par un mot binaire fourni par une sortie du dispositif 91.

Le registre à barillet 94 est intercalé entre la sortie du dispositif 9 de changement d'ordre et la borne de sortie 11 du dispositif de calcul de transformées cosinus directes mono-dimensionnelles. Le registre à barillet 94 reçoit le même mot binaire de commande que les registres 92 et 93 mais il réalise un décalage de d bits dans le sens opposé à celui réalisé par les registres 92 et 93, afin de restituer les valeurs transformées dans le format fixé, comportant 13 bits pour la partie entière et 3 bits pour la partie décimale.

Cette variante de réalisation concerne aussi bien le premier que le second dispositif de calcul de transformées cosinus mono-dimensionnelles constituant un dispositif de codage ou un dispositif de décodage d'images par transformation cosinus bi-dimensionnelle. Ainsi chaque dispositif de calcul de transformées cosinus directes mono-dimensionnelles détermine automatiquement le format fixé qui sera utilisé pendant toute la durée du traitement de 16 valeurs, en décalant le plus possible, à gauche, les valeurs à transformer sans provoquer de débordement au cours des calculs. Cette variante procure une amélioration de la précision lorsque les valeurs à transformer ont une faible dynamique, tout en restant plus simple qu'un dispositif de calcul à virgule flottante.

La figure 15 représente la répartition dans le temps de toutes les opérations de calculs réalisées selon l'algorithme de Beyeong Gi Lee, pour la transformation cosinus mono-dimensionnelle inverse. Ces opérations de calculs fournissent 16 valeurs f(0), f(1), ..., f(15) qui sont égales aux valeurs transformées inverses de 16 valeurs transformées F′(0), F′(8), F′(4), F′(12), F′(2), F′(10), F′(6), F′(14), F′(1), F′(9), F′(5), F′(13), F′(3), F′(11), F′(7), et F′(15) qui sont obtenues en appliquant l'algorithme de Beyeong Gi Lee, modifié ou non, et qui sont égales, à un facteur près, aux 16 valeurs transformées F(0), ..., F(15) des valeurs transformées données par la formule théorique (1). Ce diagramme peut être déduit du diagramme représenté sur la figure 1 et correspondant à la transformation cosinus directe, en inversant l'axe horizontal des temps. Les opérations représentées sur ce diagramme peuvent être décomposées en 7 colonnes notées COL.1, COL.2, ..., COL.7. Comme l'algorithme de Beyeong Gi Lee pour la transformation directe, l'algorithme de Beyeong Gi Lee pour la transformation inverse nécessite une séquence d'opérations différentes dans chacune des colonnes, ce qui complique la réalisation du dispositif de mise en oeuvre.

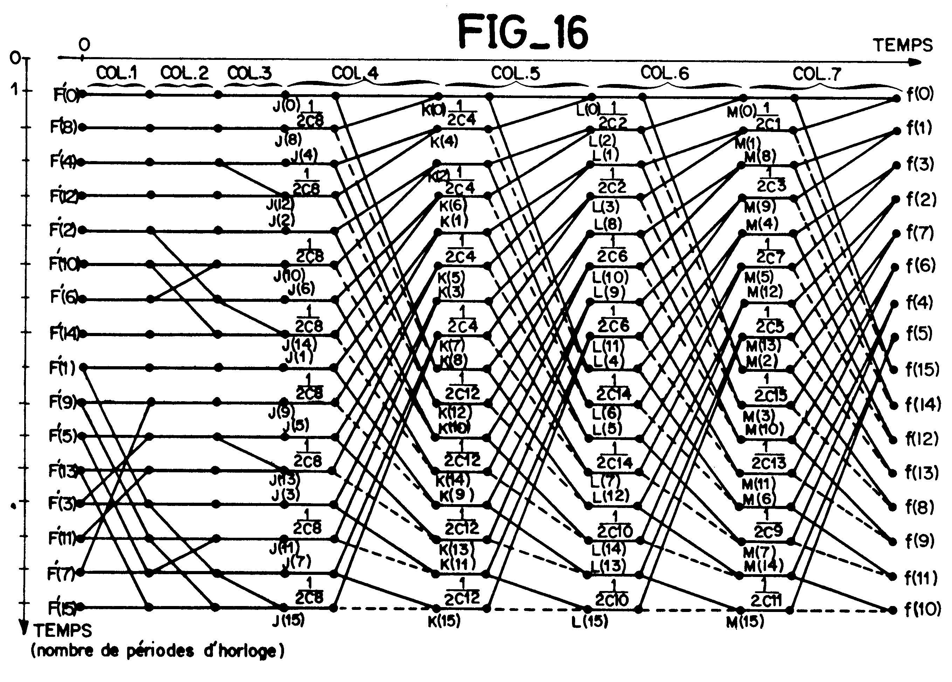

Dans le but de simplifier la réalisation du dispositif de mise en oeuvre, l'algorithme de transformation inverse est modifié de manière analogue, conformément à la figure 16. Cette modification permet d'obtenir une suite d'opérations identiques dans la colonne 4, la colonne 5, la colonne 6, et la colonne 7 du diagramme. Pour décrire cette modification, des références ont été attribuées à certaines valeurs intermédiaires fournies par les opérations de calcul représentées sur la figure 15. Les valeurs intermédiaires fournies par les opérations de calcul de la colonne 3 sont notées : J(0), J(8), J(4), J(12), J(2), J(10), J(6), J(14), J(1), J(9), J(5), J(13), J(3), J(11), J(7), J(15). Les valeurs intermédiaires fournies par les opérations de calcul de la colonne 4 sont notées K(0), ..., (K15). Les valeurs intermédiaires fournies par les opérations de calcul de la colonne 5 sont notées L(0), ..., L(15). Les valeurs intermédiaires fournies par les opérations de calcul de la colonne 6 sont notées M(0), ..., M(15).

Sur la figure 15, il apparaît que les opérations de calcul des colonnes 5, 6 et 7 peuvent être décomposées en opérations élémentaires consistant à calculer successivement deux valeurs de la forme A + D.B et A - D.B à partir de deux valeurs d'opérandes A et B et d'une valeur constante prédéterminée D.

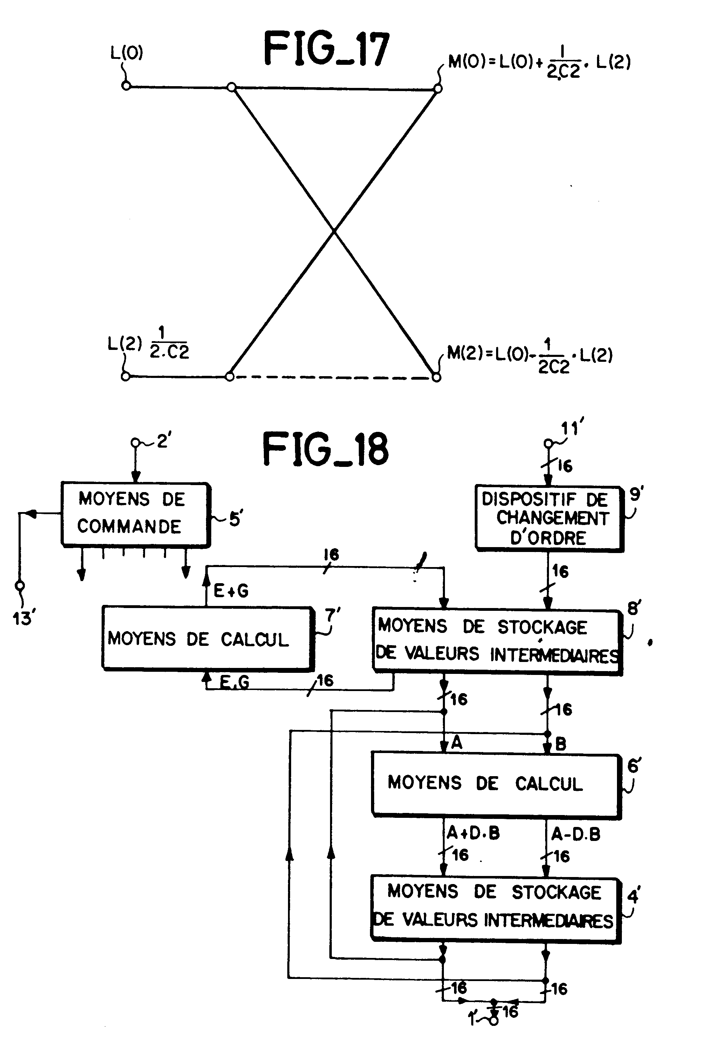

La figure 17 représente par exemple un extrait de la figure 15 représentant le calcul des valeurs M(0) et M(2) à partir de deux valeurs intermédiaires L(0) et L(2) calculées antérieurement et à partir d'une valeur constante

$$\frac{1}{2.C2} \cdot$$

Les opérations de calcul représentées dans les colonnes 1, 2 et 3 du diagramme de la figure 15 sont de simples additions ou des transmissions sans modification.

Le diagramme de la figure 15 est modifié de telle façon que les opérations élémentaires, du type de celle représentée sur la figure 17, soient réalisables sur deux opérandes disponibles consécutivement. Par conséquent la modification consiste à modifier successivement les colonnes 4, 5, 6, et 7 pour rendre consécutives les valeurs constituant les deux opérandes de chacune des opérations élémentaires. Dans l'exemple représenté sur la figure 17, la modification consistera à modifier l'ordre des opérations de calcul de la colonne 5 de telle façon que les valeurs intermédiaires L(0) et L(2) soient obtenues consécutivement afin de pouvoir réaliser ensuite immédiatement l'opération élémentaire représentée sur cette figure 17. La modification du diagramme des calculs consiste donc en un ensemble de modifications élémentaires consistant à permuter deux valeurs intermédiaires dans une même colonne.

Quand ces modifications sont terminées, l'ordre des valeurs intermédiaires fournies par les colonnes est le suivant : l'ordre des valeurs J(0), ..., (J15) n'est pas modifié. L'ordre des valeurs fournies par les calculs de la colonne 4 est : K(0), K(4), K(2), K(6), K(1), K(5), K(3), K(7), K(8), K(12), K(10), K(14), K(9), K(13), K(11), K(15). L'ordre des valeurs fournies par les calculs de la colonne 5 est : L(0), L(2), L(1), L(3), L(8), L(10), L(9), L(11), L(4), L(6), L(5), L(7), L(12), L(14), L(13), L(15). L'ordre des valeurs fournies par les calculs de la colonne 6 est : M(0), M(1), M(8), M(9), M(4), M(5), M(12), M(13), M(2), M(3), M(10), M(11), M(6), M(7), M-(14), M(15).

La structure très répétitive de ce diagramme de calcul modifié permet donc d'obtenir 64 valeurs intermédiaires, correspondant aux 4 colonnes d'opérations identiques, COL.4, COL.5, COL.6, et COL.7, au moyen d'un seul dispositif de calcul ayant une première et une seconde entrée d'opérande recevant deux valeurs A et B, ayant une entrée de troisième opérande recevant une valeur D et ayant deux sorties fournissant respectivement deux valeurs A + D.B et A - D.B. Si un tel dispositif de calcul fournit des couples de valeurs à un rythme double de celui auquel sont disponibles les valeurs transformées, alors un seul dispositif de calcul suffit pour obtenir les 64 valeurs intermédiaires pendant la durée correspondant à 16 valeurs transformées.

Il en résulte donc une structure très simple du dispositif de calcul des transformées inverses. Les opérations de calcul situées dans les colonnes, 1, 2, 3 sont constituées de 17 additions qui peuvent être réalisées facilement pendant une durée correspondant à 16 valeurs transformées, si ces calculs sont réalisés à un rythme double du rythme auquel sont disponibles les valeurs transformées. Comme pour la transformation directe, il est à remarquer que ces additions sont souvent des additions en chaine. Il est nécessaire de prévoir des mémoires pour le stockage des valeurs intermédiaires qui constituent alternativement les résultats fournis par les dispositifs de calcul et les valeurs des opérandes appliquées à ces dispositifs de calcul.

La figure 18 représente le schéma synoptique d'un exemple de réalisation d'un dispositif de calcul de transformées cosinus inverses mono-dimensionnelles selon l'invention. Cet exemple comporte : une borne d'entrée 11′ recevant des suites de 16 valeurs numériques qui peuvent être 16 valeurs transformées cosinus directes mono-dimensionnelles ou bien 16 valeurs transformées cosinus directes bidimensionnelles ; dans ce dernier cas, deux dispositifs selon l'invention sont associés en série pour réaliser un dispositif de calcul de transformées inverses bi-dimensionnelles ; une borne d'entrée 2′ recevant un signal de synchronisation ; un dispositif de changement d'ordre 9′ ; des moyens de commande 5′ ; des premiers et des seconds moyens de stockage de valeur intermédiaire, 4′ et 8′ ; des premiers et des seconds moyens de calcul, 6′ et 7′ ; une borne de sortie 1′ fournissant des suites de 16 valeurs transformées inverses, calculées selon le diagramme de calcul de la figure 16 ; et une borne de sortie 13′ fournissant un signal de synchronisation.

Le dispositif 9′ de changement d'ordre possède une entrée de données reliée à la borne d'entrée 11′ pour recevoir chaque valeur transformée, sous la forme d'un mot binaire de 16 bits et possède une sortie reliée à une première entrée des moyens de stockage 8′ pour lui fournir un mot de 16 bits. Les moyens 8′ possèdent une seconde entrée reliée à une sortie des moyens de calcul 7′ qui leur fournit un mot binaire de 16 bits. Les moyens 8′ possèdent une première et une seconde sortie couplées respectivement à une

EP 0 248 729 B1

première entrée d'opérande et à une seconde entrée d'opérande des moyens de calcul 6', et possèdent une troisième sortie reliée à une entrée des moyens de calcul 7' pour leur fournir un mot binaire de 16 bits. Les moyens de stockage 4' possèdent une première et une seconde sortie couplées respectivement à la première et à la seconde entrée des moyens de calcul 6' et couplée à la borne de sortie 1' du dispositif de calcul de transformées inverses. Les moyens de calcul 6' possèdent une première et une seconde sortie reliées respectivement à une première et une seconde entrée des moyens 4'.

Le diagramme des calculs de la figure 16 ne peut pas être déduit du diagramme des calculs de la figure 4 par une simple inversion de l'axe horizontal des temps, cependant il y a des analogies avec le diagramme de la figure 4, et ces analogies correspondent à certaines analogies dans la structure du dispositif de calcul de transformées inverses par rapport à la structure du dispositif de calcul des transformées directes. Les éléments analogues constituant le dispositif de calcul de transformées inverses sont notés avec la même référence numérique que dans le dispositif de calcul de transformées directes, mais avec l'indice prime.

Le dispositif de changement d'ordre 9' réalise un stockage et un changement d'ordre de 16 × 16 valeurs transformées reçues par la borne d'entrée 11' pour mettre les valeurs à transformer dans l'ordre représenté à gauche du diagramme des calculs de la figure 16 : F'(0), F'(8), ..., F'(7), F'(15). Lorsque deux dispositifs de calcul de transformées cosinus inverses mono-dimensionnelles sont reliés en série pour constituer un dispositif de calcul de transformées cosinus inverses bi-dimensionnelles, le premier dispositif de calcul comporte un dispositif de changement d'ordre 9' stockant 16 suites de 16 valeurs transformées directes qui sont disponibles en général dans l'ordre représenté sur la figure 6, le second dispositif de calcul stockant 16 suites de 16 valeurs transformées qui sont fournies par le premier dispositif dans l'ordre des lignes, et les restituant dans l'ordre des colonnes.

Les moyens 8' de stockage de valeurs intermédiaires ont pour rôle de stocker les valeurs intermédiaires calculées par les moyens de calcul 7' et de les restituer soit à l'entrée de ces moyens 7' soit aux deux entrées d'opérandes des moyens de calcul 6'. Les moyens 7' et les moyens 8' fonctionnent en circuit fermé pour réaliser les opérations de calcul situées dans les colonnes 1, 2 et 3 du diagramme de la figure 16. Les moyens 7' calculent une valeur de la forme E + G à partir de deux opérandes E et G appliqués consécutivement à son entrée. Les moyens de calcul 6' calculent deux valeurs A + D.B et A - D.B à partir de deux opérandes A et B appliqués consécutivement sur les deux entrées d'opérande. La fonction arithmétique réalisée par les moyens de calcul 6' est donc différente de celle réalisée par les moyens de calcul 6 du dispositif de calcul des transformées directes.

Les moyens 4' de stockage de valeurs intermédiaires stockent les valeurs calculées par les moyens 6' et les fournissent soit aux entrées d'opérandes de ces moyens 6' soit à la borne de sortie 1' du dispositif de calcul de transformées inverses. Les moyens 6' et 4' fonctionnent en circuit fermé pour réaliser les calculs situés dans les colonnes 5, 6 et 7 du diagramme de la figure 16 puis les valeurs transformées inverses sont fournies à la borne de sortie 1'. Des moyens de commande 5' génèrent des signaux d'horloge et des signaux de commande pour l'ensemble des éléments du dispositif de calcul de transformées inverses en particulier un signal d'horloge commandant les calculs à un rythme double de celui auquel les valeurs transformées sont appliquées sur la borne d'entrée 11'. Les moyens 5' reçoivent par la borne d'entrée 2' un signal de synchronisation correspondant au début de chaque bloc de 16 × 16 valeurs transformées directes appliquées successivement à la borne d'entrée 11'. Ils fournissent à la borne de sortie 13' un signal de synchronisation correspondant au début de chaque bloc de 16 × 16 valeurs transformées inverses fournies par la borne de sortie 1'.

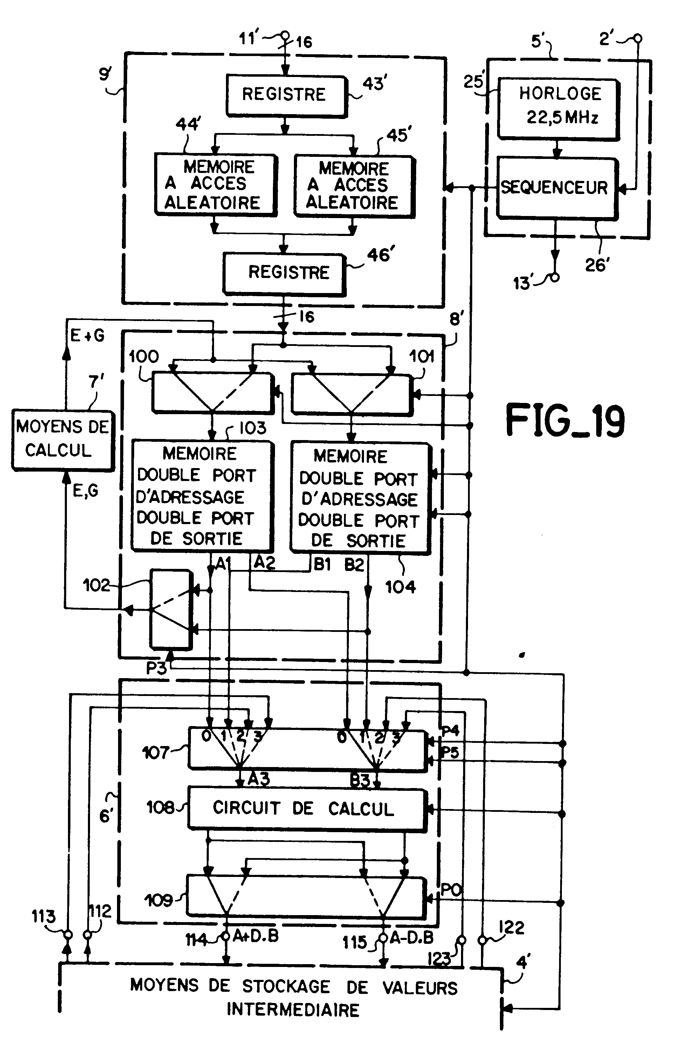

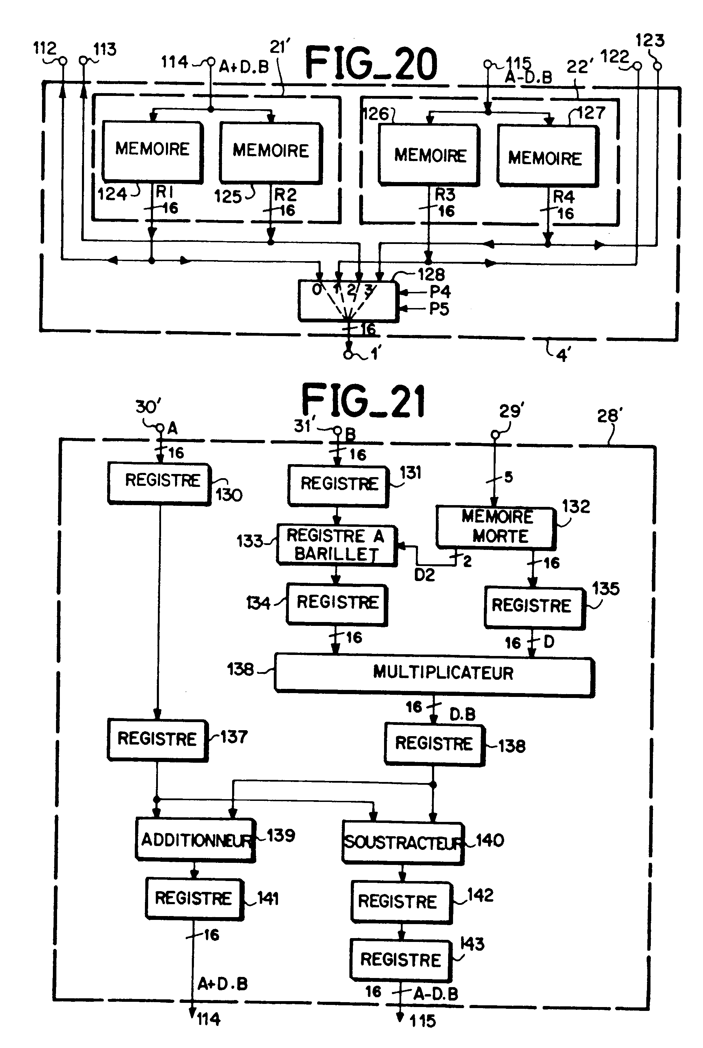

Les figures 19 et 20 représentent un schéma synoptique plus détaillé de cet exemple de réalisation. Les moyens 5' comportent une horloge 25' fournissant un signal d'horloge dont la fréquence est de 22,5 MHz, et un séquenceur 26'. Le séquenceur 26' est commandé par l'horloge 25' pour fournir des signaux de commande, et le signal de synchronisation appliqué à la borne de sortie 13'. Le dispositif 9' de changement d'ordre est constitué de deux registres 43' et 46' et de deux mémoires vives à accès aléatoire 44' et 45'. Chacune de ces mémoires a une capacité de 16 × 16 valeurs transformées directes et elles fonctionnent en alternat, l'une étant utilisée en écriture pendant que l'autre est utilisée en lecture. Chacune de ces mémoires est constituée de 4 circuits intégrés Cy 7C122 fabriqués par Cypress.

Le registre 43' possède une entrée constituant l'entrée du dispositif 9' reliée à la borne d'entrée 11' et possède une sortie reliée à une entrée de données de la mémoire 44' et à une entrée de données de la mémoire 45'. Le registre 46' possède une entrée reliée à une sortie de données de la mémoire 44' et à une sortie de données de la mémoire 45' et possède une sortie constituant la sortie du dispositif 9'.

Les mémoires 44' et 45' possèdent chacune une entrée d'adresse et une entrée de commande de lecture et d'écriture, reliées à une sortie multiple des moyens 5'. Le registre 43' possède une entrée de commande, non représentée, recevant un signal d'horloge fourni par les moyens 5' au rythme des valeurs

24

transformées directes appliquées à la borne d'entrée 11'. Le registre 46' possède une entrée de commande, non représentée, recevant un signal d'horloge fourni par les moyens 5' à un rythme de 22,5 MHz correspondant à deux fois le rythme des valeurs transformées directes appliquées à la borne d'entrée 11'. Les opérations de lecture dans la mémoire 44' ou dans la mémoire 45' sont réalisées à un rythme deux fois plus élevé que le rythme des opérations d'écriture dans ces mémoires. Tous les calculs réalisés sur les valeurs restituées par le dispositif 9', sont réalisés à un rythme deux fois plus élevé que le rythme des valeurs transformées directes appliquées à la borne d'entrée 11'. Les moyens de calcul 7' sont identiques aux moyens 7 du dispositif de calcul de transformées cosinus directes.

Les moyens 8' comportent : trois multiplexeurs, 100 à 102, à deux entrées et une sortie ; deux mémoires vives, 103 et 104, à double port d'adressage et double port de sortie. Les multiplexeurs 100 et 101 possèdent deux premières entrées reliées à la première entrée des moyens 8', deux secondes entrées reliées à la seconde entrée des moyens 8', et deux sorties reliées respectivement à une entrée de données de la mémoire 103 et à une entrée de données de la mémoire 104. Les mémoires 103 et 104 possèdent chacune deux ports de sortie qui sont notés A1, A2, pour la mémoire 103 et B1, B2 pour la mémoire 104. Le multiplexeur 102 possède une première entrée reliée au port de sortie A1, une seconde entrée reliée au port de sortie B2, et une sortie constituant la sortie des moyens 8' qui est reliée à l'entrée des moyens de calcul 7'.

Les ports de sortie A1 et B1 constituent la première sortie des moyens 8' et les ports de sortie A2 et B2 constituent la seconde sortie des moyens 8'. Les multiplexeurs 101 et 100 possèdent chacun une entrée de commande reliée à une sortie des moyens de commande 5'. Chacune des mémoires 103 et 104 a une capacité de 16 × 16 valeurs et est constituée de quatre circuits intégrés Am29707 fabriqués par la société AMD. Il est possible de réaliser simultanément une écriture et une lecture dans chacune de ces mémoires. Les multiplexeurs 100 et 101 permettent de stocker, dans la mémoire 103 ou 104, soit une valeur transformée directe fournie par les moyens 9', soit une valeur intermédiaire fournie par les moyens 7'. Le multiplexeur 102 permet de fournir, à l'entrée des moyens 7', soit une valeur stockée dans la mémoire 103, soit une valeur stockée dans la mémoire 104.

Les moyens de calcul 6' comportent : un multiplexeur 107 à huit entrées et deux sorties ; un circuit de calcul 108 ; et un multiplexeur 109 à quatre entrées et deux sorties. Une première sortie du multiplexeur 107 est reliée à une première entrée, notée A3, des moyens de calcul 108. Une seconde sortie du multiplexeur 107 est reliée à une seconde entrée, notée B3, des moyens de calcul 108. Quatre premières entrées, notées 0, 1, 2, 3 du multiplexeur 107 peuvent être mises en communication avec la première sortie. Ces quatre premières entrées sont reliées respectivement aux ports de sortie A1 et B1, des mémoires 103 et 104, et à des bornes de sortie 112 et 113 des moyens 4' de stockage de valeurs intermédiaires. Quatre secondes entrées du multiplexeur 107, notées 0, 1, 2, 3, peuvent être mises en communication avec la seconde sortie de ce multiplexeur 107 et sont reliées respectivement aux ports de sortie A2 et B2 des mémoires 103 et 104, et à des bornes de sortie 122 et 123 des moyens 4'. Le multiplexeur 107 est commandé par un mot binaire de deux bits P4, P5, fourni par une sortie des moyens de commande 5'.

Le multiplexeur 109 possède deux premières entrées reliées respectivement à une première et à une seconde sortie du circuit de calcul 108, deux secondes entrées reliées respectivement à la seconde et à la première sortie du circuit 108, et une première et une seconde sortie qui peuvent être mises en communication respectivement avec les premières entrées ou avec les secondes entrées sous l'action d'un signal de commande, ces sorties constituant les deux sorties des moyens de calcul 6' et étant reliées respectivement à des bornes d'entrée 114 et 115 des moyens 4'. Le multiplexeur 109 possède une entrée de commande recevant un signal de commande binaire P0 fourni par une sortie des moyens 5'.

Le multiplexeur 107 permet de sélectionner la provenance d'une valeur appliquée à l'entrée A3 et d'une valeur appliquée à l'entrée B3 du circuit de calcul 108. Il y a quatre provenances possibles : la mémoire 103, la mémoire 104, et deux mémoires constituant les moyens de stockage 4' qui seront décrits par la suite. Le multiplexeur 109 permet de réaliser une permutation des deux valeurs fournies par le circuit de calcul 108 afin de les diriger vers l'une des deux mémoires constituant les moyens de stockage 4', alternativement au rythme du signal d'horloge.

La figure 20 représente un schéma synoptique des moyens de stockage 4'. Ils comportent : deux mémoires 21' et 22', chacune constituée elle-même de deux mémoires ; et un multiplexeur 127 à quatre entrées et une sortie. La mémoire 21' est constituée de deux mémoires vives à accès aléatoire, 124 et 125. La mémoire 22' est constituée de deux mémoires vives à accès aléatoire, 126 et 127. Chacune des mémoires 124 à 127 a une capacité de 16 valeurs de 16 bits. Leurs sorties sont notées respectivement R1, R2, R3, R4. Les quatre entrées du multiplexeur 128 sont notées 0, 1, 2, 3 et peuvent être mises en communication avec sa sortie constituant une sortie des moyens de stockage 4′ et étant reliée à la borne de sortie 1′. Le multiplexeur possède une entrée de commande reliée à une sortie des moyens 5′. Il est commandé par le mot binaire P4, P5 comme le multiplexeur 107.

La sortie R1 de la mémoire 124 est reliée à la borne de sortie 112 des moyens 4′ et à l'entrée 0 du multiplexeur 128. La sortie R2 de la mémoire 125 est reliée à la borne de sortie 113 des moyens 4′ et à l'entrée 2 du multiplexeur 128. La sortie R3 de la mémoire 126 est reliée à la borne de sortie 122 des moyens 4′ et à l'entrée 1 du multiplexeur 128. La sortie R4 de la mémoire 127 est reliée à la borne de sortie 123 des moyens 4′ et à l'entrée 3 du multiplexeur 128. Chacune des mémoires 124 à 127 est constituée de quatre circuits intégrés Am 29707 dont les seconds ports de sortie ne sont pas utilisés. Ces mémoires 124 à 127 possèdent chacune un port d'adressage de lecture, un port d'adressage d'écriture, et une entrée de commande de lecture et d'écriture, reliés à des sorties des moyens de commande 5′. Les mémoires 124 et 125 sont commandées alternativement en écriture et en lecture pour stocker puis restituer les résultats de la forme A + B.D. De même, les mémoires 126 et 127 sont utilisées alternativement en lecture et en écriture pour stocker et pour restituer les résultats de la forme A - D.B calculés par les moyens 8′. Lorsqu'un résultat constitue une valeur de transformée inverse, le multiplexeur 128 transmet cette valeur à la borne de sortie 1′. Tous les signaux de commande fournis par les moyens de commande 5′ ont une période égale à 32 périodes du signal d'horloge commandant les calculs.

La figure 21 représente un schéma synoptique d'un exemple de réalisation du circuit de calcul 28′, qui comporte : neuf registres, 130, 131, 134, 135, 137, 138, 141, 142, 143, ayant chacun une capacité d'une valeur de 16 bits ; un registre à barillet 133 ; une mémoire morte 132 ; un additionneur 139 ; un soustracteur 140. Trois bornes d'entrées : 29′, 30′, 31′, reçoivent respectivement un opérande A représenté par 16 bits, un opérande B représenté par 16 bits, et un mot de commande représenté par 5 bits et fourni par les moyens de commande 5′. Le registre 130 possède une sortie reliée à une entrée du registre 137. Le registre 131 possède une sortie reliée à une entrée du registre à barillet 133. Le registre 134 possède une entrée reliée à une sortie du registre à barillet 133 et possède une sortie reliée à une première entrée du multiplicateur 136. Le registre 135 possède une entrée reliée à une sortie de données de la mémoire morte 132 fournissant un mot de 16 bits $D_1$ et possède une sortie reliée à une seconde entrée d'opérande du multiplicateur 136.

Le registre à barillet 133 possède une entrée de commande de décalage reliée à une sortie de données de la mémoire morte 132 fournissant un mot binaire de deux bits $D_2$. Le registre 138 possède une entrée reliée à une sortie du multiplicateur 136 fournissant un mot binaire de 16 bits représentant la valeur D.B, et possède une sortie reliée à une première entrée de l'additionneur 139 et à une première entrée du soustracteur 140. Le registre 137 possède une sortie reliée à une seconde entrée de l'additionneur 139 et à une seconde entrée du soustracteur 140. Le registre 141 possède une entrée reliée à une sortie de l'additionneur 139 et une sortie constituant la première sortie du circuit 28′ et reliée à la borne d'entrée 114 des moyens 4′ pour lui fournir la valeur A + D.B . Le registre 142 possède une entrée reliée à une sortie du soustracteur 140 et possède une sortie reliée à une entrée du registre 143. Ce dernier possède une sortie constituant la seconde sortie du circuit 28′ et étant reliée à la borne d'entrée 115 des moyens 4′ pour lui fournir la valeur A - D.B . Le multiplicateur 136 est constitué d'un circuit intégré Am 29517 fabriqué par AMD. L'additionneur 139 et le soustracteur 140 sont réalisés chacun au moyen de circuits intégrés 74F374, 74F381, et 74F182, fabriqués par AMD.

Dans l'ensemble du dispositif de calcul de transformées cosinus inverses mono-dimensionnelles les valeurs numériques ont un format de 10 bits pour la partie entière, y compris le signe, et de 6 bits pour la partie décimale. Ce format a été choisi car il permet de représenter, sans débordement, les valeurs maximales des valeurs transformées directes, des valeurs intermédiaires, et des valeurs transformées inverses.

La multiplication de l'opérande B par une valeur prédéterminée D est réalisée, d'une part, au moyen du registre à barillet 133 produisant un décalage de 0, ou 1, ou 2, ou 3 bits, et, d'autre part, au moyen du multiplicateur 136. La mémoire 132 fournit, d'une part un mot binaire $D_2$ de deux bits indiquant la valeur du décalage à réaliser et, d'autre part, un mot binaire $D_1$ de 16 bits constituant un opérande appliqué à la seconde entrée du multiplicateur 136. La valeur de D est égale à

$$2^{D_2} \times D_1.$$

Les valeurs D sont celles indiquées sur le diagramme des calculs, représenté sur la figure 16. Le multiplicateur 136, le registre à barillet 133, et la mémoire morte 132 permettent de conserver le format prédéterminé pour les valeurs numériques, 10 bits pour la partie entière et 3 bits pour la partie décimale, par un fonctionnement analogue à celui décrit pour le circuit de calcul 28 du dispositif de calcul de transformées directes.

Les registres 130, 131, 134, 135, 137, 138, 141, 142, 143 possèdent chacun une entrée d'horloge recevant le signal d'horloge fourni par les moyens de commande 5′. Le registre 143 a pour rôle de retarder d'une période d'horloge la valeur A - D.B par rapport à la valeur A + D.B déterminée à partir des mêmes valeurs d'opérandes A et B, afin de les stocker successivement et non pas simultanément dans la mémoire 21′ et dans la mémoire 22′.

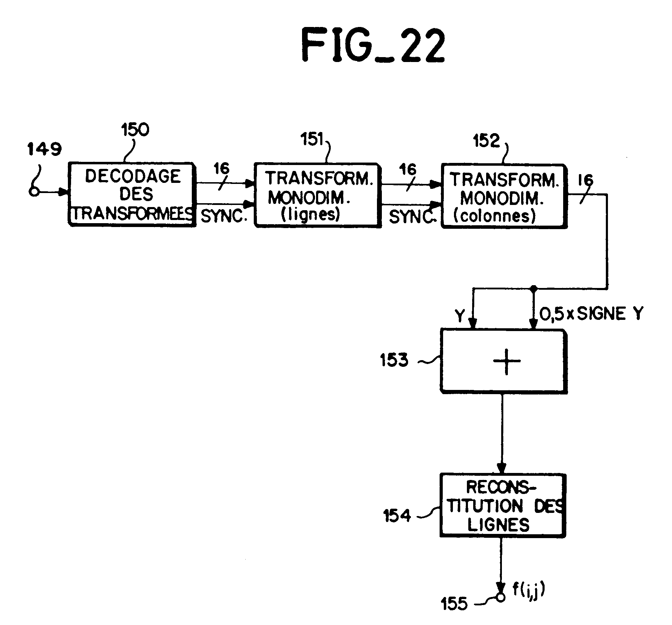

La figure 22 représente le schéma synoptique d'un exemple de réalisation d'un dispositif de décodage d'images qui ont été codées par une transformation cosinus directe bi-dimensionnelle. Ce dispositif comporte en série : un dispositif 150 de décodage des valeurs des transformées cosinus directes bi-dimensionnelles ; deux dispositifs de calcul de transformées cosinus inverses mono-dimensionnelles 151 et 152 ; un additionneur 153 ; et un dispositif 154 de reconstitution des lignes d'image. Une borne d'entrée 149 reçoit des blocs de $16 \times 16$ valeurs codées représentant des blocs de $16 \times 16$ valeurs de transformées cosinus directes bi-dimensionnelles, par un codage qui a été réalisé, par exemple, selon le procédé décrit dans :

IEEE Transactions on Communications, VOL.COM-32, N°3, March 1984, "Scene Adaptative Coder" de WEN-HSIUNG CHEN et William K. PRATT.

Le dispositif de décodage 150 décode les valeurs codées selon un procédé inverse de ce procédé de codage et qui est décrit dans le même document, et le dispositif 150 fournit des valeurs décodées à une première entrée du dispositif 151. Le dispositif de décodage 150 fournit aussi un signal de synchronisation à une seconde entrée du dispositif 151, pour chaque bloc de $16 \times 16$ valeurs décodées qu'il lui fournit. Le dispositif 151 réalise une transformation cosinus mono-dimensionnelle en lignes, successivement sur 16 suites de 16 valeurs, pour chaque paquet. Il fournit à une première entrée du dispositif 152 un paquet constitué de 16 suites de 16 valeurs, accompagné d'un signal de synchronisation appliqué à une seconde entrée du dispositif 152. Le dispositif 152 réalise une transformation cosinus inverse mono-dimensionnelle en colonnes successivement sur 16 suites de 16 valeurs du paquet fourni par le dispositif 151.

Le dispositif 152 a une sortie reliée à une première entrée de l'additionneur 153 et fournissant un mot binaire de 16 bits, de valeur Y, dix bits représentant la partie entière y compris le signe de Y et 6 bits représentant la partie décimale. Une seconde entrée de l'additionneur 153 reçoit un bit qui est le bit de signe de la valeur Y, noté Signe(Y). L'additionneur 153 additionne le bit de signe de Y aux 16 bits représentant Y, en donnant au bit à additionner, Signe(Y), un rang qui correspond au bit de poids maximal dans la partie décimale, c'est-à-dire le sixième rang à partir de la droite. L'additionneur 153 ajoute ainsi à Y une valeur égale à 0,5 lorsque Y a une valeur négative et permet ainsi d'améliorer statistiquement la précision de la restitution des valeurs de luminance, car une étude statistique des erreurs de codage et de décodage a montré qu'il y a statistiquement une erreur par défaut qui peut être réduite en additionnant à chaque valeur de luminance décodée une valeur de correction égale à 0,5 lorsque la valeur Y est négative et égale à 0 lorsque la valeur Y est positive.

L'additionneur 153 possède une sortie fournissant un mot binaire de 16 bits représentant une valeur de luminance, 10 bits représentant la partie entière et le signe, 6 bits représentant la partie décimale. Les 2 bits de poids les plus forts, et les bits de la partie décimale permettent de détecter et d'écrêter les valeurs de Y qui sont négatives, ou supérieures à 255. Les valeurs de luminance étant restituées par blocs de $16 \times 16$ valeurs correspondant à des blocs carrés de $16 \times 16$ points d'image, il est nécessaire de reconstituer une suite de valeurs de luminance correspondant à l'ordre d'analyse habituel d'une image, c'est-à-dire correspondant à chaque point d'une ligne successivement, pour chaque ligne successivement. Ce rôle est rempli par le dispositif 154 de restitution des lignes, qui remet en ordre les valeurs de luminance f(i,j) puis les fournit à une borne de sortie 155 du dispositif de décodage.

L'invention peut être appliquée notamment pour le codage et le décodage d'image de télévision dans un magnétoscope numérique.

## Revendications

1. Dispositif de calcul de transformées cosinus directes monodimensionnelles, pour transformer des suites de 16 valeurs d'opérandes représentatives de la luminance et de la couleur de points d'une image à transformer du type comportant une mémoire d'entrée (3) pour stocker chaque suite déterminée de 16 valeurs d'opérandes, caractérisé en ce qu'il comprend :

- des premiers (4) et seconds moyens (8) de stockage de valeurs intermédiaires d'opérandes couplés à des premiers moyens de calcul (6) comprenant un circuit additionneur (52) et un circuit soustracteur (53) couplé à une première entrée d'opérande d'un circuit multiplicateur (61) par l'intermédiaire d'un registre à décalage (58) de $D_2$ positions de décalage pour calculer, à partir de deux valeurs d'opérandes A et B lues dans la mémoire d'entrée (3) ou dans les premiers moyens de stockage de valeurs intermédiaires (4) et d'une valeur de coefficient

$$D = 2^{D_2} x D_1$$

où $D_1$ est un nombre binaire de longueur déterminée appliquée sur la deuxième entrée d'opérande du circuit multiplieur (61), la somme A + B des deux valeurs d'opérandes A et B et la différence de ces deux valeurs d'opérandes multipliée par D, pour que la valeur (A-B)D du résultat obtenue soit toujours exprimée dans le même format binaire que la différence A-B ; chaque somme A + B et différence (A-B) multipliée par D obtenues étant stockées dans les premiers (4) et seconds moyens (8) de stockage de valeurs intermédiaires,
- des seconds moyens de calcul (7) couplés aux seconds moyens de stockage de valeurs intermédiaires (8) pour calculer des sommes consécutives d'opérandes E = A + B et G = (A-B)D contenues dans les seconds moyens de stockage de valeurs intermédiaires (8)
  et des moyens de commande (5) commandant les premiers et les seconds moyens (4 et 8) de stockage de valeurs intermédiaires, et les premiers et les seconds moyens de calcul (6 et 7) pour fournir durant un premier cycle de calcul (col.1 ; Fig.4) des sommes A + B et les différences A-B multipléés par D d'opérandes A et B restituées deux par deux de la mémoire d'entrée (3), fournir durant un nombre déterminé de cycles de calculs suivants (col 2,3,4 ; Fig. 4) des résultats intermédiaires à partir des sommes A + B et des différences A-B multipliées par D d'opérandes A et B lues dans les premiers moyens de stockage de valeurs intermédiaires (4) et fournir pendant les derniers cycles restants des résultats intermédiaires et des valeurs de transformées cosinus à partir des valeurs intermédiaires stockées dans les deuxièmes moyens de stockage de valeurs intermédiaires (8).

2. Dispositif selon la revendication 1, caractérisé en ce que dans les premiers et seconds moyens de stockage des valeurs intermédiaires (4 et 8) et les premiers et seconds moyens de calcul (6 et 7), les valeurs numériques traitées ont un format où la place de la virgule est prédéterminée.

3. Dispositif selon la revendication 2, caractérisé en ce que la place de la virgule est prédéterminée une fois pour toutes en fonction d'un majorant de toutes les valeurs de toutes les suites de 16 valeurs à transformer.

4. Dispositif selon la revendication 2, caractérisé en ce que, pour améliorer la précision des calculs, la place de la virgule est prédéterminée avant le calcul des transformées de chaque suite de 16 valeurs à transformer, en fonction de la valeur maximale de chaque suite ; et en ce que le dispositif comporte en outre :
    - des moyens (90) pour déterminer une valeur maximale parmi seize valeurs à transformer ;
    - des moyens (91) pour calculer, à partir de cette valeur maximale une valeur de décalage d correspondant au plus grand décalage à gauche applicable aux valeurs à transformer sans provoquer de dépassement au cours du calcul des transformées ;
    - un premier et un second registre à barillet (92, 93) pour décaler de d bits à gauche chacune des valeurs appliquées à une première et à une seconde entrée des premiers moyens de calcul (6) ;
    - un registre à barillet (94) pour décaler de d bits à droite les valeurs fournies par une première sortie des seconds moyens de stockage (8) de valeurs intermédiaires.

5. Dispositif selon la revendication 1, caractérisé en ce que les premiers moyens de calcul (6) comportent :
    - un circuit de calcul (28) recevant les deux valeurs A et B, et fournissant les deux valeurs A + B et (A - B) D, la valeur A + B étant retardée d'une durée égale à une période d'horloge ;

- des multiplexeurs (34, 35) transmettant ces deux valeurs respectivement à une première et une seconde sortie des moyens de calcul (6), en permutant les valeurs transmises, au rythme du signal d'horloge ;

et en ce que les premiers moyens (4) de stockage de valeurs intermédiaires comportent deux mémoires distinctes (21, 22) pour stocker séparemment les valeurs fournies respectivement par la première et la seconde sortie des premiers moyens de calcul (6) puis les fournir respectivement à une première et à une seconde entrée des premiers moyens de calcul (6).

6. Dispositif selon la revendication 1, caractérisé en ce que la mémoire d'entrée (3) comporte une mémoire vive (24) ayant un port d'entrée couplé à une borne d'entrée (1) recevant les valeurs à transformer, un premier et un second port de sortie constituant respectivement une première et une seconde sortie de la mémoire d'entrée (3), des entrées de commande et deux ports d'adressage couplés aux moyens de commande (5) ; les moyens de commande (5) commandant l'écriture de 16 valeurs à transformer, au rythme où elles sont fournies au dispositif de calcul de transformées, et commandant leur lecture au rythme du signal d'horloge.

7. Dispositif selon la revendication 1, caractérisé en ce que les seconds moyens (8) de stockage de valeurs intermédiaires comportent :
- deux mémoires vives à accès aléatoire (40, 41) ayant chacune un port d'entrée de données, deux ports d'adressage, un port de sortie de données, et une entrée de commande couplé à une sortie des moyens de commande (5) ;
- des moyens de multiplexage (36 à 39) pour coupler les deux ports d'entrée de données à des sorties des premiers et des seconds moyens de calcul (6 et 7) et pour coupler les deux ports de sortie de données à une entrée des seconds moyens de calcul (7) et à la borne de sortie (11) du dispositif de calcul de transformées ;

et en ce que les moyens de commande (5) commandent les moyens de multiplexage (36 à 39) et les deux mémoires (40, 41) pour :
- écrire dans les mémoires (40, 41) des couples de valeurs fournis par les premiers moyens de calcul (6) pendant seize premières périodes d'horloge ;
- lire dans les mémoires (40, 41) des seconds moyens de stockage (8) seize valeurs intermédiaires à fournir aux seconds moyens de calcul (7) et seize valeurs transformées à fournir à la borne de sortie (11) ; et écrire dans les mémoires (40, 41) seize valeurs fournies par les seconds moyens de calcul (7), pendant seize autres périodes d'horloge.

8. Dispositif selon la revendication 1, caractérisé en ce que les premiers moyens de calcul (6) comportent :
- un multiplicateur (61) ;
- un registre à barillet (58) ;
- une mémoire morte (56) ;

et en ce que pour réaliser une multiplication d'une valeur A - B, par une valeur D, en obtenant un résultat ayant le même format que A - B, la mémoire morte (56) fournit une valeur prédéterminée $D_1$ à une première entrée du multiplicateur (61) et une valeur prédéterminée $D_2$ à une entrée de commande du registre à barillet (58) pour commander un décalage de $D_2$ bits à gauche, du contenu de ce registre (58), la valeur $D_1$ étant positive et inférieure ou égale à 1 et la valeur $D_2$ étant un nombre entier positif ou nul tel que

$$2^{D_2} \times D_1 = D$$

et tel que le registre à barillet (58) fournit une valeur A - B, décalée de $D_2$ bits à gauche, à une seconde entrée du multiplicateur (61).

9. Dispositif selon la revendication 1, caractérisé en ce que pour améliorer la précision du calcul, il comporte des moyens (180 à 182) pour soustraire à chacune des valeurs d'une suite de 16 valeurs à transformer, avant leurs transformation, la valeur moyenne de ces 16 valeurs à transformer ; et des moyens (183 à 185) pour additionner cette valeur moyenne, à la valeur transformée correspondant à cette valeur moyenne.

**10.** Dispositif selon la revendication 1, caractérisé en ce qu'une sortie des moyens (8) de stockage des valeurs intermédiaires est couplée à la borne de sortie (11) du dispositif de calcul de transformées, par un dispositif (9) de changement de l'ordre des valeurs transformées, ayant une capacité de 16 × 16 valeurs et commandé par les moyens de commande (5) avec une période correspondant à 16 × 16 valeurs à transformer.

**11.** Dispositif de codage d'images par transformation cosinus bi-dimensionnelle, caractérisé en ce qu'il comporte deux dispositifs (73, 74) de calcul de transformées cosinus mono-dimensionnelles, selon l'une des revendications 1 à 10.

**12.** Dispositif de codage selon la revendication 11, caractérisé en ce que pour améliorer la précision du codage, il comporte des moyens (80 à 82) pour soustraire à chacune des valeurs à transformer, représentatives d'un bloc de 16 × 16 points d'image, avant leur codage, la valeur moyenne des 16 × 16 valeurs à transformer ; et des moyens (83 à 85) pour additionner cette valeur moyenne, à la valeur transformée correspondant à cette valeur moyenne.

**13.** Dispositif de calcul de transformées cosinus inverses monodimensionnels, pour transformer une suite de valeurs transformées directes, caractérisé en en ce qu'il comporte :
- des premiers moyens de calcul (7') pour calculer des sommes d'opérandes $E + G$ représentant les coefficients de la transformation cosinus $[F'(0)...F'(15)]$ directe,
  des premiers moyens (8') de stockage de valeurs intermédiaires, couplés à une entrée et à une sortie des premiers moyens de calcul (7') pour leur fournir comme opérandes des valeurs qu'ils ont calculées antérieurement, et couplés à une borne d'entrée (11') recevant les valeurs à transformer ;
- des seconds moyens de calcul (6') couplés aux premiers moyens (8') de stockage de valeurs intermédiaires pour calculer deux valeurs binaires de la forme $A + DB$ et $A\text{-}DB$, où A et B sont deux opérandes représentant deux valeurs intermédiaires, où D est un coefficient prédéterminé ; et où la valeur DB est obtenue par décalage dans un registre à décalage (133) à $D_2$ positions de la valeur binaire B et multiplication de la valeur binaire B décalée par un nombre $D_1$ par un circuit multiplicateur (138) tel que

$$D = 2^{D_2} x D_1$$

de façon que les valeurs $A\text{-}DB$ et $A + DB$ obtenues soient toujours exprimées dans le même format binaire ;
- des seconds moyens (4') de stockage de valeurs intermédiaires, couplés aux seconds moyens de calcul (6') pour leur fournir comme opérandes des valeurs qu'ils ont calculées antérieurement, et couplés à une borne de sortie (1') du dispositif de calcul de transformées inverses, pour fournir à cette borne de sortie (1') une suite de 16 valeurs transformées inverses ;
- des moyens de commande (5') commandant les premiers et les seconds moyens (8' et 4') de stockage de valeurs intermédiaires, et les premiers et les seconds moyens de calcul (7' et 6') pour calculer :
- durant des premiers cycles de calcul (col 1, 2, 3 ; Fig.16) des premières valeurs intermédiaires à partir de sommes de coefficients de la transformation cosinus direct ;
- durant des deuxièmes cycles (col 4, 5, 6) les valeurs binaires de la forme $A + DB$ et $A\text{-}DB$ à partir des valeurs intermédiaires stockées dans les premiers et deuxièmes moyens (8' et 4') de stockage de valeurs intermédiaires pour obtenir les valeurs correspondantes des valeurs transformées inverses.

**14.** Dispositif selon la revendication 13, caractérisé en ce que dans les premiers et seconds moyens de stockage des valeurs intermédiaires (8' et 4') et les premiers et seconds moyens de calcul (7' et 6'), les valeurs numériques traitées ont un format où la place de la virgule est prédéterminée.

**15.** Dispositif selon la revendication 14, caractérisé en ce que la place de la virgule est prédéterminée une fois pour toutes en fonction d'un majorant de toutes les valeurs de toutes les suites de 16 valeurs à transformer.

**16.** Dispositif selon la revendication 13, caractérisé en ce que les seconds moyens de calcul (6') comportent :

- un circuit de calcul (108) recevant les deux opérandes A et B, et fournissant les deux valeurs A + DB et A - DB, la valeur A - DB étant retardée d'une durée égale à une période d'horloge ;
- des multiplexeurs (109) transmettant ces deux valeurs respectivement à une première et une seconde sortie des seconds moyens de calcul (6'), en permutant les valeurs transmises, au rythme du signal d'horloge ;

et en ce que les seconds moyens (4') de stockage de valeurs intermédiaires comportent deux mémoires distinctes (21', 22') pour stocker séparemment les valeurs fournies respectivement par la première et la seconde sortie des seconds moyens de calcul (6') puis les fournir respectivement à une première et à une seconde entrée des seconds moyens de calcul (6').

**17.** Dispositif selon la revendication 13, caractérisé en ce que les premiers moyens (8') de stockage des valeurs intermédiaires comportent :

- deux mémoires vives à accès aléatoire (103, 104) ayant chacune un port d'entrée de données, deux ports d'adressage, deux ports de sortie de données, et des entrées de commande couplées à des sorties des moyens de commande (5') ;
- des moyens de multiplexage (100 à 102) pour coupler les deux ports d'entrée de données à une sortie des premiers moyens de calcul (7') et à une borne d'entrée (11') du dispositif de calcul de transformées inverses, et pour coupler les deux ports de sortie de données à des entrées des seconds moyens de calcul (6').

**18.** Dispositif selon la revendication 13, caractérisé en ce que les seconds moyens de calcul (6') comportent :

- un multiplicateur (136) ;
- un registre à barillet (133) ;
- une mémoire morte (132) ;
- un additionneur (140) ;
- un soustracteur (138) ;

et en ce que pour réaliser une multiplication d'une valeur B par une valeur D, en obtenant un résultat ayant le même format que B, la mémoire morte (132) fournit une valeur prédéterminée $D_1$ à une première entrée du multiplicateur (136) et une valeur prédéterminée $D_2$ à une entrée de commande du registre à barillet (133) pour commander un décalage de $D_2$ bits à gauche, de la valeur B contenue dans ce registre (133), la valeur $D_1$ étant positive et inférieure ou égale à 1 et la valeur $D_2$ étant un nombre entier positif ou nul tel que

$$2^{D_2} \times D_1 = D$$

et tel que le registre à barillet (103) fournit une valeur B décalée de $D_2$ bits à gauche, à une seconde entrée du multiplicateur (136).

**19.** Dispositif selon la revendication 13, caractérisé en ce qu'il comporte en outre un dispositif (9') de changement de l'ordre des valeurs transformées directes, ayant une capacité de 16 × 16 valeurs, couplant une entrée des premiers moyens (8') de stockage des valeurs intermédiaires à une borne d'entrée (11') du dispositif de calcul de transformées, et commandé par les moyens de commande (5') avec une période correspondant à 16 × 16 valeurs à transformer.

**20.** Dispositif de décodage d'images par transformation cosinus bi-dimensionnelle, caractérisé en ce qu'il comporte deux dispositifs (151, 152) de calcul de transformées cosinus mono-dimensionnelles inverses, selon l'une des revendications 13 à 19.

**21.** Dispositif de décodage selon la revendication 20, caractérisé en ce que pour améliorer la précision du décodage, il comporte des moyens (153) pour additionner à chacune des valeurs transformées inverses, Y, une valeur égale à 0,5 × Signe(Y), où Signe(Y) est la valeur du bit de signe de Y.

**Claims**

1. A device for computing monodimensional direct cosine transforms, for transforming sequences of 16 operand values representing the brightness and the colour of image points which are to be transformed, the device comprising an input memory (3) for storing each predetermined sequence of 16 operand values, characterized in that it comprises
   - first and second means (4, 8) for storing intermediate operand values, said means being coupled to first computer means (6) comprising an adder circuit (52) and a subtractor circuit (53), the latter coupled to a first operand input of a multiplier circuit (61) via a shift register (58) intended to shift by $D_2$ positions, in order to compute, from two operand values (A and B) read out from the input memory (3) or from the first intermediate value storage means (4) and from a coefficient value

$$D = 2^{D_2} x D_1$$

   in which $D_1$ is a binary number of a predetermined length applied to the second operand input of the multiplier circuit (61), the sum $A+B$ of the two operand values A and B and the difference between these two operand values multiplied by D, in such a way that the result obtained (A-B)D is always expressed in the same binary format as the difference A-B, each sum obtained $(A+B)$ and difference A-B multiplied by D being stored in the first and second intermediate value storage means (4, 8),
   - second computer means (7) coupled to the second intermediate value storage means (8) for calculating the consecutive sums of operands $E = A+B$ and $G = (A-B)D$ stored in the second intermediate value storage means (8),
   - and control means (5) for controlling the first and second intermediate value storage means (4 and 8) and the first and second computer means (6 and 7) and for supplying during a first computer cycle (col. 1; figure 4) sums $A+B$ and differences A-B multiplied by D, from the operands A and B supplied pairwise by the input memory (3), for supplying during a predetermined number of later computer cycles (col. 2, 3, 4; figure 4) intermediate results from the sums $(A+B)$ and the differences (A-B) multiplied by D of the operands A and B read out from the first intermediate value storage means (4), and for supplying during the last remaining cycles intermediate results and cosine transform values from intermediate values stored in the second intermediate value storage means (8).

2. A device according to claim 1, characterized in that in the first and the second intermediate value storage means (4 and 8) and the first and second computer means (6 and 7), the processed digital values present a format in which the point position is predetermined.

3. A device according to claim 2, characterized in that the point position is predetermined in a general manner in accordance with the highest one of all the values of all the sequences of 16 values to be transformed.

4. A device according to claim 2, characterized in that in view of improving the computing accuracy, the point position is predetermined prior to the calculation of the transforms of each sequence of 16 values to be transformed in accordance with the highest value of each sequence, and that the device further comprises
   - means (90) for determining a maximum value among 16 values to be transformed,
   - means (91) for calculating from of this maximum value a shift value d corresponding to the highest left shift value applicable to the values to be transformed without exceeding the computer limits during the calculation of the transforms,
   - a first and a second shift register (92, 93) for shifting each one of the values applied to the first and the second input of the first computer means (6) by d bits to the left,
   - a shift register (94) for shifting the values supplied by a first output of the second intermediate value storage means (8) by d bits to the right.

5. A device according to claim 1, characterized in that the first computer means (6) comprise
   - a computer circuit (28) which receives the two values A and B and supplies the two values $(A+B)$ and (A-B)D, the value $A+B$ being delayed by one clock period,

- multiplexers (34, 35) transmitting these two values respectively to a first and a second output of the computer means (6) by interchanging the transmitted values at the rythm of the clock signal, and that the first intermediate value storage means (4) comprise two distinct memories (21, 22) for storing separately the values supplied respectively by the first and the second output of the first computer means (6) and for thereafter supplying them respectively to a first and a second input of the first computer means (6).

6. A device according to claim 1, characterized in that the input memory (3) comprises a read-write memory (24) having an input coupled to an input terminal (1) and receiving the values to be transformed, a first and a second output constituting respectively a first and a second output of the input memory (3), control inputs and two addressing inputs coupled to the control means (5), the control means (5) controlling the writing of 16 values to be transformed at the rythm at which they are supplied to the device for computing the transforms, and controlling their read-out operation at the rythm of the clock signal.

7. A device according to claim 1, characterized in that the second intermediate value storage means (8) comprise
   - two random access read-write memories (40, 41), each having a data input, two addressing inputs, a data output and a control input coupled to an output of the control means (5),
   - multiplexer means (36 to 39) for coupling the two data inputs to the outputs of the first and second computer means (6, 7) and for coupling the two data outputs to an input of the second computer means (7) and to the output terminal (11) of the device for computing the transforms, and that the control means (5) control the multiplexer means (36 to 39) and the two memories (40, 41) such that
   - pairs of values supplied by the first computer means (6) are written into the memories (40, 41) during the first 16 clock periods,
   - 16 intermediate values to be supplied to the second computer means (7) and 16 transformed values to be supplied to the output terminal (11) are read out from the memories (40, 41) of the second storage means (8), and 16 values supplied by the second computer means (7) are written into the memories (40, 41) during 16 other clock periods.

8. A device according to claim 1, characterized in that the first computer means (6) comprise:
   - a multiplier (61),
   - a shift register (58);
   - a read-only memory (56),
   and that, in order to realise a multiplication of a value A-B by a value D, such that a result having the same format as A-B is obtained, the read-only memory (56) supplies a predetermined value $D_1$ to a first input of the multiplier (61), and a predetermined value $D_2$ to a control input of the shift register (58) for shifting the content of this register (58) by $D_2$ bits to the left, the value $D_1$ being positive and at most equal to unity and the value $D_2$ being a positive integer or zero, such that

$$2^{D_2} x D_1 = D$$

and that the shift register (58) supplies to a second input of the multiplier (61) a value A-B shifted by $D_2$ bit positions to the left.

9. A device according to claim 1, characterized in that in view of an increase of the computing accuracy, it comprises means (180 to 182) for subtracting, prior to transformation, from each of the values of a sequence of 16 values to be transformed the mean value of these 16 values to be transformed, and means (183 to 185) for adding this mean value to the transform value corresponding to this mean value.

10. A device according to claim 1, characterized in that an output of the intermediate value storage means (8) is coupled to the output terminal (11) of the device for computing the transforms through a device (9) for changing the order of the transformed values, this device having a capacity of 16x16 values and being controlled by the control means (5) with a period corresponding to 16x16 values to be transformed.

33

**11.** A device for encoding images by two-dimensional cosine transformation, characterized in that it comprises two devices (73, 74) for calculating the monodimensional cosine transforms according to one of claims 1 to 10.

**12.** An encoding device according to claim 11, characterized in that in view of the improvement of the encoding accuracy, it comprises means (80 to 82) for subtracting from each of the values to be transformed representative of a block of 16x16 image points prior to their encoding, the mean value of the 16x16 values to be transformed, and means (83 to 85) for adding this mean value to the transform value corresponding to this mean value.

**13.** A device for computing inverse monodimensional cosine transforms for transforming a sequence of 16 direct transform values, characterized in that it comprises:
- first computer means (7') for calculating operand sums $E + G$ representing the coefficients of the direct cosine transformation [F'(0)...F'(15)],
- first intermediate value storage means (8') coupled to an input and an output of the first computer means (7') for supplying thereto as operands values which they have previously computed, and coupled to an input terminal (11') which receives the values to be transformed,
- second computer means (6') coupled to the first intermediate value storage means (8') for calculating two binary values of the type $A + DB$ and $A-DB$ in which A and B are two operands representing two intermediate values, D is a predetermined coefficient and the value DB is obtained by shifting the value B in a shift register (133) by $D_2$ positions and by multiplying the shifted binary value B with a number $D_1$ in a multiplier circuit (138) such that

$$D = 2^{D_2} x D_1$$

in such a way that the values A-DB and $A + DB$ obtained are always expressed in the same binary format,
- second intermediate value storage means (4') coupled to the second computer means (6') in order to supply thereto as operands values which they have previously calculated, and coupled to an output terminal (1') of the device for computing the inverse transforms, for supplying to this output terminal (1') a sequence of 16 inverse transform values,
- control means (5') controlling the first and second intermediate value storage means (8' and 4') and the first and second computer means (7' and 6'), in order to calculate
- during first computer cycles (col. 1, 2, 3; figure 16) first intermediate values from the sums of coefficients of the direct cosine transformation;
- during second cycles (col. 4, 5, 6) the binary values of the type $A + DB$ and $A-DB$ from the intermediate values stored in the first and second intermediate value storage means (8' and 4') in order to obtain the corresponding values of the inverse transform values.

**14.** A device according to claim 13, characterized in that in the first and second intermediate value storage means (8' and 4') and the first and second computer means (7' and 6') the processed digital values have a format in which the point position is predetermined.

**15.** A device according to claim 14, characterized in that the point position is predetermined generally in accordance with a maximum value among all of the values of all the sequences of 16 values to be transformed.

**16.** A device according to claim 13, characterized in that the second computer means (6') comprise
- a computer circuit (108) which receives the two operands A and B and supplies the two values $A + DB$ and A-DB, the value A-DB being delayed by one clock period,
- multiplexers (109) transmitting these two values respectively to a first and a second output of the second computer means (6') by interchanging the transmitted values at the rythm of the clock signal,
and that the second intermediate value storage means (4') comprises two distinct memories (21', 22') for storing separately the values supplied respectively by the first and second output of the second computer means (6'), and then for supplying these values respectively to a first and a second input of the second computer means (6').

**17.** A device according to claim 13, characterized in that the first intermediate value storage means (8') comprise:
- two read-write random access memories (103, 104) each having a data input, two addressing inputs, two data outputs and control inputs coupled to outputs of the control means (5'),
- multiplexer means (100 to 102) for coupling the two data inputs to an output of the first computer means (7') and to an input terminal (11') of the device for computing the inverse transforms, and for coupling the two outputs to inputs of the second computer means (6').

**18.** A device according to claim 13, characterized in that the second computer means (6') comprise
- a multiplier (136),
- a shift register (133),
- a read-only memory (132),
- an adder (140),
- a subtractor (138)

and that, for realising a multiplication of a value B by a value D, thereby obtaining a result having the same format as B, the read-only memory (132) supplies a predetermined value $D_1$ to a first input of the multiplier (136) and a predetermined value $D_2$ to a control input of the shift register (133) for controlling the shifting of the value B contained in this register (133) by $D_2$ positions to the left, the value $D_1$ being positive and at most equal to 1 and the value $D_2$ being a positive integer or zero, such that

$$2^{D_2} x D_1 = D$$

and such that the shift register (103) supplies a value D shifted by $D_2$ bits to the left to a second input of the multiplier 136.

**19.** A device according to claim 13, characterized in that it further comprises a device (9') for changing the order of the direct transform values, this device having a capacity of 16x16 values and coupling an input of the first intermediate value storage means (8') to an input terminal (11') of the device for computing the transforms, and controlled by the control means (5') with a period corresponding to 16x16 values to be transformed.

**20.** A device for decoding images by the two-dimensional cosine transformation, characterized in that it comprises two devices for computing the inverse onedimensional cosine transforms according to one of claims 14 to 19.

**21.** A decoding device according to claim 20, characterized in that, in view of improving the decoding accuracy, it comprises means (153) for adding to each one of the inverse transform values Y a value equal to 0,5sign(Y), in which sign(Y) is the value of the sign bit of Y.

**Patentansprüche**

**1.** Vorrichtung zur Berechnung von direkten eindimensionalen Cosinustransformierten zur Transformation von Folgen von sechzehn für die Helligkeit und die Farbe von Punkten eines zu transformierenden Bildes repräsentativen Operandenwerten, mit einem Eingangsspeicher (3), um jede bestimmte Folge von sechzehn Operandenwerten zu speichern, dadurch gekennzeichnet, daß die Einrichtung aufweist:
- erste (4) und zweite Speichermittel (8) für Operanden-Zwischenwerte, die an erste Rechenmittel (6) mit einem Addierkreis (52) und einem an einen ersten Operandeneingang eines Multiplizierkreises (61) über ein Schieberegister (58), das um $D_2$ Stellen verschiebt, gekoppelten Subtrahierkreis (53) angekoppelt sind, um ausgehend von zwei Operandenwerten A und B, die aus dem Eingangsspeicher (3) oder aus den ersten Zwischenwertspeichermitteln (4) ausgelesen werden, und aufgrund eines Koeffizienten

$$D = 2^{D_2} x D_1,$$

wobei $D_1$ eine an den zweiten Operandeneingang des Multiplizierkreises (61) angelegte Binärzahl einer gegebenen Länge ist, die Summe A + B der beiden Operandenwerte A und B sowie die Differenz dieser beiden Operandenwerte multipliziert mit D zu berechnen, so daß der Wert (A-B)D des erhaltenen Ergebnisses stets das gleiche Binärformat wie die Differenz A-B besitzt, wobei jede Summe A + B und Differenz A-B multipliziert mit D in den ersten (4) und zweiten Speichermitteln (8) für Zwischenwerte gespeichert wird,

- zweite Rechenmittel (7), die an die zweiten Speichermittel für Zwischenwerte (8) gekoppelt sind, um aufeinanderfolgende Summen E = A + B und G = (A-B)D von in den zweiten Zwischenwertspeichermitteln (8) enthaltenen Operanden zu bilden,

- und Steuermittel (5), die die ersten und zweiten Zwischenwertspeichermittel (4 und 8) und die ersten und zweiten Rechenmittel (6 und 7) steuern, um während eines ersten Rechenzyklus (Spalte 1; Figur 4) Summen A + B und Differenzen A-B multipliziert mit D aus den Operanden A und B zu liefern, die paarweise vom Eingangsspeicher (3) abgegeben werden, um während einer bestimmten Anzahl von nachfolgenden Rechenzyklen (Spalte 2, 3, 4; Figur 4) Zwischenergebnisse aufgrund der Summen A + B und der mit D multiplizierten Differenzen A-B der aus den ersten Zwischenwertspeichermitteln (4) ausgelesenen Operanden A und B zu liefern und um während der verbleibenden Zyklen Zwischenergebnisse und Werte der Cosinustransformierten ausgehend von den in den zweiten Zwischenwertspeichermitteln (8) gespeicherten Zwischenwerten zu liefern.

2. Vorrichtung nach Anspruch 1, dadurch gekennzeichnet, daß in den ersten und zweiten Zwischenwertspeichermitteln (4 und 8) und den ersten und zweiten Rechenmitteln (6 und 7) die verarbeiteten digitalen Werte ein Festkommaformat besitzen.

3. Vorrichtung nach Anspruch 2, dadurch gekennzeichnet, daß die Kommaposition von vorneherein abhängig von einem Höchstwert aller Werte in der ganzen Folge von sechzehn zu transformierenden Werten festgelegt wird.

4. Vorrichtung nach Anspruch 2, dadurch gekennzeichnet, daß zur Erhöhung der Rechengenauigkeit die Position des Kommas vor der Berechnung der Transformierten jeder Folge von sechzehn zu transformierenden Werten abhängig vom Höchstwert jeder Folge bestimmt wird, und daß die Vorrichtung außerdem aufweist

- Mittel (90) zur Bestimmung eines Maximalwerts aus den sechzehn zu transformierenden Werten,

- Mittel (91) zur Berechnung eines Verschiebewerts d ausgehend von diesem Höchstwert entsprechend der größten Linksverschiebung, die auf die zu transformierenden Werte anwendbar ist, ohne eine Überschreitung während der Transformiertenberechnung hervorzurufen,

- ein erstes und zweites Schieberegister (92, 93), um jeden der an einen ersten und einen zweiten Eingang der ersten Rechenmittel (6) angelegten Werte um d Bits nach links zu verschieben,

- ein Schieberegister (94), um die an einem ersten Ausgang der zweiten Zwischenwertspeichermittel (8) verfügbaren Werte um d Bits nach rechts zu verschieben.

5. Vorrichtung nach Anspruch 1, dadurch gekennzeichnet, daß die ersten Rechenmittel (6) aufweisen:

- einen Rechenkreis (28), der die beiden Werte A und B zugeführt erhält und die beiden Werte (A + B) und (A-B)D liefert, wobei der Werte von A + B um eine Taktperiode verzögert ist,

- Multiplexer (34, 35), die diese beiden Werte an einen ersten bzw. zweiten Ausgang der Rechenmittel (6) liefern, indem sie die übertragenen Werte im Rhythmus des Taktsignals permutieren,

und dadurch gekennzeichnet, daß die ersten Zwischenwertspeichermittel (4) zwei getrennte Speicher (21, 22) aufweisen, um getrennt die am ersten Ausgang bzw. am zweiten Ausgang der ersten Rechenmittel (6) verfügbaren Werte zu speichern und dann an einen ersten bzw. zweiten Eingang der ersten Rechenmittel (6) zu liefern.

6. Vorrichtung nach Anspruch 1, dadurch gekennzeichnet, daß der Eingangsspeicher (3) einen Arbeitsspeicher (24) aufweist, der einen mit der Eingangsklemme (1) zum Empfang der zu transformierenden Werte gekoppelten Eingangsport, einen ersten und zweiten Ausgangsport, die einen ersten bzw. zweiten Ausgang des Arbeitsspeichers (3) bilden, Steuereingänge und zwei Adressierports, die an die Steuermittel (5) gekoppelt sind, wobei die Steuermittel (5) das Einschreiben von sechzehn zu transformierenden Werten im Rhythmus steuern, in dem sie an die Vorrichtung zur Berechnung der Transformierten geliefert werden, und außerdem ihr Auslesen im Rhythmus des Taktsignals steuern.

**7.** Vorrichtung nach Anspruch 1, dadurch gekennzeichnet, daß die zweiten Zwischenwertspeichermittel (8) aufweisen:

- zwei frei adressierbare Arbeitsspeicher (40, 41), die je einen Dateneingangsport, zwei Adressierports, einen Datenausgangsport und einen Steuereingang besitzen, der an einen Ausgang der Steuermittel (5) gekoppelt ist,
- Multiplexiermittel (36 bis 39), um die beiden Dateneingangsports an die Ausgänge der ersten und zweiten Rechenmittel (6 und 7) und die beiden Datenausgangsports an einen Eingang der zweiten Rechenmittel (7) und an die Ausgangsklemme (11) der Vorrichtung zur Berechnung der Transformierten zu koppeln, und dadurch gekennzeichnet, daß die Steuermittel (5) die Multiplexiermittel (36 bis 39) und die beiden Speicher (40 und 41) so steuern, daß
- in die Speicher (40, 41) von den ersten Rechenmitteln (6) während sechzehn ersten Taktperioden gelieferte Wertepaare eingeschrieben werden,
- aus den Speichern (40, 41) der zweiten Speichermittel (8) sechzehn an die zweiten Rechenmittel (7) zu liefernde Zwischenwerte und sechzehn an die Ausgangsklemme (11) zu liefernde transformierte Werte ausgelesen werden und daß in die Speicher (40, 41) sechzehn von den zweiten Rechenmitteln (7) während sechzehn weiterer Taktperioden gelieferte Werte eingeschrieben werden.

**8.** Vorrichtung nach Anspruch 1, dadurch gekennzeichnet, daß die ersten Rechenmittel (6) aufweisen:
- ein Multiplizierglied (61),
- ein Schieberegister (58),
- einen Festwertspeicher (56),
und daß zum Multiplizieren eines Werts (A-B) mit einem Wert D und zum Erhalt eines Ergebnisses im gleichen Format wie (A-B) der Festwertspeicher (56) einen vorgegebenen Wert $D_1$ an einen ersten Eingang des Multiplizierglieds (61) und einen vorgegebenen Wert $D_2$ an einen Steuereingang des Schieberegisters (58) liefert, um eine Verschiebung des Inhalts dieses Registers (58) um $D_2$ Bits nach links zu bewirken, wobei der Wert $D_1$ positiv und kleiner oder gleich Eins und der Wert $D_2$ eine positive ganze Zahl oder Null ist, derart, daß

$$2^{D_2} x D_1$$

gleich D ist und daß das Schieberegister (58) einen Wert A-B um $D_2$ Bits nach links verschoben an einen zweiten Eingang des Multiplizierglieds (61) liefert.

**9.** Vorrichtung nach Anspruch 1, dadurch gekennzeichnet, daß zur Erhöhung der Rechengenauigkeit Mittel (180 bis 182), um von jedem der Werte einer Folge von sechzehn zu transformierenden Werten vor ihrer Transformation der Mittelwert dieser sechzehn Werte abzuziehen, und Mittel (183 bis 185) vorgesehen sind, um diesen Mittelwert dem diesem Mittelwert entsprechenden transformierten Wert hinzuzuaddieren.

**10.** Vorrichtung nach Anspruch 1, dadurch gekennzeichnet, daß ein Ausgang der Zwischenwertspeichermittel (8) an die Ausgangsklemme (11) der Vorrichtung zur Berechnung der Transformierten über eine Vorrichtung (9) angeschlossen ist, die die Reihenfolge der transformierten Werte verändert und eine Kapazität von 16x16 Werten besitzt, sowie von den Steuermitteln (5) mit einer Periode entsprechend 16x16 zu transformierenden Werten gesteuert wird.

**11.** Vorrichtung zur Kodierung von Bildern durch eine zweidimensionale Cosinustransformation, dadurch gekennzeichnet, daß sie zwei Vorrichtungen (73, 74) zur Berechnung der eindimensionalen Cosinustransformierten nach einem der Ansprüche 1 bis 10 enthält.

**12.** Vorrichtung zur Kodierung nach Anspruch 11, dadurch gekennzeichnet, daß zur Erhöhung der Rechengenauigkeit Mittel (80 bis 82), um von jedem der zu transformierenden Werte, die einem Block von 16x16 Bildpunkten entsprechen, vor ihrer Kodierung den Mittelwert der 16x16 zu transformierenden Werte abzuziehen, und Mittel (83 bis 85) vorgesehen sind, um diesen Mittelwert dem diesem Mittelwert entsprechenden transformiertem Wert hinzuzuaddieren.

**13.** Vorrichtung zur Berechnung von inversen eindimensionalen Cosinustransformierten, zur Transformation einer Folge von sechzehn direkten transformierten Werten, dadurch gekennzeichnet, daß sie aufweist

- erste Rechenmittel (7') zur Berechnung der Operandensummen E + G, die die Koeffizienten der direkten Cosinustransformation [F'(0)...F'(15)] darstellen,
- erste Zwischenwertspeichermittel (8'), die an einen Eingang und einen Ausgang der ersten Rechenmittel (7') gekoppelt sind, um ihnen als Operanden Werte zu liefern, die sie vorher berechnet hatten, und die an eine Eingangsklemme (11') zum Empfang der zu transformierenden Werte gekoppelt sind,
- zweite Rechenmittel (6'), die an die ersten Zwischenwertspeichermittel (8') angeschlossen sind und zwei Binärwerte der Form A + DB und A-DB berechnen, wobei A und B zwei zwei Zwischenwerte repräsentierende Operanden sind, D ein vorgegebener Koeffizient ist, und der Wert DB durch Verschiebung des Werts B in einem Schieberegister (133) um $D_2$ Stellen und Multiplikation des verschobenen Binärwerts B mit einer Zahl $D_1$ in einem Multiplizierglied (138) erhalten wird, derart, daß

$$D = 2^{-D_2} \times D_1$$

ist und daß die erhaltenen Werte A-DB und A + DB stets im gleichen Binärformat ausgedrückt werden,

- zweite Zwischenwertspeichermittel (4'), die an die zweiten Rechenmittel (6) gekoppelt sind, um ihnen als Operanden Werte zu liefern, die sie vorher berechnet haben, und die an eine Ausgangsklemme (1') der Vorrichtung zur Berechnung der inversen Transformierten gekoppelt sind, um an diese Ausgangsklemme (1') eine Folge von sechzehn inversen transformierten Werten zu liefern,
- Steuermittel (5'), die die ersten und zweiten Zwischenwertspeichermittel (8' und 4') und die ersten und zweiten Rechenmittel (7' und 6') so steuern, daß
- während erster Rechenzyklen (Spalte 1, 2, 3; Figur 16) erste Zwischenwerte ausgehend von Koeffizientensummen der direkten Cosinustransformation berechnet werden,
- und während zweiter Zyklen (Spalte 4, 5 und 6) die Binärwerte der Form A + DB und A-DB ausgehend von den in den ersten und zweiten Zwischenwertspeichermitteln (8' und 4') gespeicherten Zwischenwerten berechnet werden, um die entsprechenden Werte der inversen transformierten Werte zu erhalten.

**14.** Vorrichtung nach Anspruch 13, dadurch gekennzeichnet, daß in den ersten und zweiten Zwischenwertspeichermitteln (8' und 4') und den ersten und zweiten Rechenmitteln (7' und 6') die verarbeiteten digitalen Werte ein Format besitzen, in dem die Stelle des Vorzeichens vorgegeben ist.

**15.** Vorrichtung nach Anspruch 14, dadurch gekennzeichnet, daß die Stelle des Vorzeichens ein für alle Mal abhängig von einem Höchstwert aller Werte aller Folgen von zu transformierenden sechzehn Werten festgelegt wird.

**16.** Vorrichtung nach Anspruch 13, dadurch gekennzeichnet, daß die zweiten Rechenmittel (6') aufweisen

- einen Rechenkreis (108), der die beiden Operanden A und B empfängt und die beiden Werte A + DB und A-DB liefert, wobei der Wert A-DB um eine Dauer gleich einer Taktperiode verzögert ist,
- Multiplexer (109), die diese beiden Werte an einen ersten bzw. zweiten Ausgang der zweiten Rechenmittel (6') übertragen, indem sie die übertragenen Werte im Rhythmus des Taktsignals permutieren,

und dadurch gekennzeichnet, daß die zweiten Zwischenwertspeichermittel (4') zwei getrennte Speicher (21', 22') zur getrennten Speicherung der am ersten bzw. zweiten Ausgang der zweiten Rechenmittel (6') vorliegenden Werte und zur anschließenden Lieferung dieser Werte an einen ersten bzw. einen zweiten Eingang der zweiten Rechenmittel (6') aufweisen.

**17.** Vorrichtung nach Anspruch 13, dadurch gekennzeichnet, daß die ersten Zwischenwertspeichermittel (8') aufweisen:

- zwei frei adressierbare Arbeitsspeicher (103, 104) mit je einem Dateneingangsport, zwei Adressierports, zwei Datenausgangsports und Steuereingängen, die an die Ausgänge der Steuermittel (5') angeschlossen sind,
- Multiplexiermittel (100 bis 102), um die beiden Dateneingangsports mit einem Ausgang der ersten Rechenmittel (7') und einer Eingangsklemme (11') der Vorrichtung zur Berechnung der inversen Transformierten zu verbinden und um die beiden Datenausgangsports mit Eingängen der zweiten Rechenmittel (6') zu verbinden.

18. Vorrichtung nach Anspruch 13, dadurch gekennzeichnet, daß die zweiten Rechenmittel (6') aufweisen:
- ein Multiplizierglied (136),
- ein Schieberegister (133),
- einen Festwertspeicher (132),
- einen Addierer (140),
- ein Subtrahierglied (138),

und daß zur Durchführung einer Multiplikation eines Werts B mit einem Wert D und zur Erzielung eines Ergebnisses mit demselben Format wie B der Festwertspeicher (132) einen vorgegebenen Wert $D_1$ an einen ersten Eingang des Multiplizierglieds (136) und einen vorgegebenen Wert $D_2$ an einen Steuereingang des Schieberegisters (133) liefert, um eine Verschiebung des in diesem Register (133) stehenden Werts B um $D_2$ Bits nach links zu bewirken, wobei der Wert $D_1$ und kleiner oder gleich Eins ist, während der Wert $D_2$ eine positive ganze Zahl oder Null ist, derart, daß gilt

$$2^{D_2} x D_1 = D$$

und daß das Schieberegister (103) einen um $D_2$ Bits nach links verschobenen Wert B an einen zweiten Eingang des Multiplizierglieds (136) liefert.

19. Vorrichtung nach Anspruch 13, dadurch gekennzeichnet, daß sie außerdem eine Vorrichtung (9') zur Veränderung der Reihenfolge der direkten transformierten Werte aufweist, deren Kapazität 16x16 Werte beträgt und die einen Eingang der ersten Zwischenwertspeichermittel (8') an eine Eingangsklemme (11') der Vorrichtung zur Berechnung der Transformierten koppelt und von den Steuermitteln (5') mit einer Periode von 16x16 zu transformierenden Werten gesteuert wird.

20. Vorrichtung zum Dekodieren von Bildern durch zweidimensionale Cosinustransformation, dadurch gekennzeichnet, daß sie zwei Vorrichtungen (151, 152) zur Berechnung der inversen eindimensionalen Cosinustransformierten nach einem der Ansprüche 13 bis 19 enthält.

21. Dekodiervorrichtung nach Anspruch 20, dadurch gekennzeichnet, daß zur Erhöhung der Dekodiergenauigkeit Mittel (153) vorgesehen sind, um jedem der inversen transformierten Werte Y einen Wert gleich 0,5xVorzeichen(Y) hinzuzuaddieren, wobei Vorzeichen(Y) der Werte des Vorzeichenbits von Y ist.

FIG_1

# FIG_2

$f_0$               $f_0 + f_{15}$         $f_0 + f_{15}$

$f_{15}$              $f_0 - f_{15}\ \dfrac{1}{2C_1}$     $(f_0 - f_{15}) \times \dfrac{1}{2C_1}$

# FIG_3

$g_1$         $g_1 + g_2$        $g_1 + g_2$        $F_4 = g_1 + g_2$

$g_2$         $g_2$        $g_2$        $F_{12} = g_2$

FIG_4

(nombre de périodes d'échantillonnage)

EP 0 248 729 B1

## FIG_5

## FIG_6

FIG_7

# FIG_8

# FIG_9

## FIG_10

HORLOGE 22,5 MHz — 25

REGISTRES

COMPTEUR O A 31 — 50

COMPTEUR O A 511 — 51

DECODEUR — 54

5

9

MEMOIRE MORTE — 52

MEMOIRE MORTE — 53

MEMOIRES 21,22,24,37,56

MEMOIRES 34,35,36

MEMOIRE 44   MEMOIRE 45

13

## FIG_11

$f(i,j)$

DECOMPOSITION EN BLOCS — 72

TRANSFORM. MONODIM. (lignes) — 73

TRANSFORM. MONODIM. (colonnes) — 74

sync.

$F(u,v)$

DISPOSITIF DE NORMALISATION — 75

$F'(u,v)$

CODAGE DES TRANSFORMEES — 76

71

77

## FIG_12

78   SYNC.

$f(i,j)$

79

RETARD — 80

SOUSTRACTEUR — 81

TRANSFORM. MONODIM. — 73

TRANSFORM. MONODIM. — 74

DISPOSITIF DE NORMALISATION — 75

CALCUL DE VALEUR MOYENNE — 82

84

O

ADDITIONNEUR — 85

MOYENS DE COMMANDE — 83

$F''(u,v)$

CODAGE DES TRANSFORM. — 76

86

# FIG_13

# FIG_14

FIG_15

EP 0 248 729 B1

FIG_16

# FIG_17

L(0)

$M(0) = L(0) + \dfrac{1}{2.C2} \cdot L(2)$

$L(2) \quad \dfrac{1}{2.C2}$

$M(2) = L(0) - \dfrac{1}{2C2} \cdot L(2)$

# FIG_18

2'

MOYENS DE COMMANDE 5'

13'

MOYENS DE CALCUL 7'

E+G

E.G 16

16

11'

16

DISPOSITIF DE CHANGEMENT D'ORDRE 9'

16

MOYENS DE STOCKAGE DE VALEURS INTERMEDIAIRES 8'

16 16

A B

MOYENS DE CALCUL 6'

A+D.B A-D.B

16 16

MOYENS DE STOCKAGE DE VALEURS INTERMEDIAIRES 4'

16 16

16

FIG_19

# FIG_20

# FIG_21

# FIG_22